# EUROPEAN PATENT APPLICATION

(11) **EP 1 621 239 A1**
(43) Date of publication of application: **01.02.2006**
(21) Application number: 04702851.9
(22) Date of filing: 16.01.2004
(51) Int. Cl.: A63F 13/12

(54) **GAME SYSTEM AND GAME SERVER**

(30) Priority: 17.01.2003 JP 2003010443; 17.01.2003 JP 2003010444
(71) Applicant: Aruze Corp., Tokyo 135-0063 (JP)
(72) Inventor: SHINODA, Tomohiro, 1350063 (JP)
(74) Representative: Grünecker, Kinkeldey, Stockmair & Schwanhäusser Anwaltssozietät
(86) International application number: PCT/JP2004/000326
(87) International publication number: WO 2004/064960

(57) **Abstract**

The present invention concerns a gaming system and a gaming server, and provides a gaming system and a gaming server by which enjoyment can be sustained. A gaming server 21 comprises: game result storage means, storing game results concerning the game for each of a plurality of game players; ranking determining means, determining a plurality of types of rankings concerning the game based on the game results stored by the game result storage means; ranking information setting means, setting, from among the plurality of types of ranking information determined by the ranking determining means, plurality of types of desired ranking information, which are desired by a game player, in accordance with the player operation of the operating part of a gaming terminal among the plurality of gaming terminals; and transmitting means, transmitting a signal, for making the plurality of desired ranking information, set by means of the ranking information setting means, be displayed on the gaming terminal of the game player, to the gaming terminal of the game player.

## Description

### FIELD OF THE INVENTION

The present invention relates to a gaming system and a gaming server.

### RELATED ART

Among conventional gaming systems is known a configuration, wherein a plurality of gaming terminals, which is operable by game players, and a gaming server, for providing information based on signals supplied from the plurality of gaming terminals, are connected in a communicable manner. This gaming system enables the players to enjoy a game without gathering at a particular place.

An example of such a gaming system is a video game device that enables an unspecified number of game players to compete in a game via the Internet (for example, Japanese Unexamined Patent Publication No. 2002-219282). With this video game device, a gaming server provides ranking information based on the game results of the respective game players.

However, the ranking information that such a system displays are of a predefined type. Thus even though the rankings themselves change, the type of ranking information itself does not change, and the game thus tends to be monotonous.

For example, since the ranking information is monotonous, a game player may not feel the ranking information to be fresh as he/she continues with the game.

Also, even when various types of ranking information is set up, due to the limits of the display region in a display device, it is difficult to display all types of ranking information, and for a player, it is troublesome to have to perform an operation of selecting the type of ranking information to be displayed each time. Also, the type of ranking information desired by a game player differs according to the game results and the interest of each individual.

Ranking information is also relative information that is affected not just by a player's own game result but by the game results of other players as well. The degree of improvement of a player's skill in a game is therefore not directly reflected in the display of the ranking information.

An example in a competing game shall now be described. The ranking of a game player, who has continued to compete with strong opponents and has improved in gaming skills upon repeating wins and losses, may be lower than the ranking information of a game player, who has continued to compete with weak opponents and, though having kept winning, has not improved in gaming skills. In such a case, the interest of a game player in the ranking information may decrease.

Also with the conventional system, a tournament is carried out by players of high score ranking. However, since the qualification for participation is limited only to high-score players, a game player cannot readily participate in a tournament immediately even if he/she wants to, and this could lessen a game player's enjoyment of participating in a game.

In the case of a mah-jong game that is played upon gathering participants through a network, the participants are awarded points based on the game results. The participants compete for the ranking of the accumulated points, and a tournament is carried out by upper-ranking players. Though there is the interest factor of competing for ranking with an aim at entering a tournament, since the ranking is based only on the accumulated points, the enjoyment of winning a tournament title is provided only to a part of the game players.

Also, with a game carried out by communication, there is a degree of freedom in the locations of the game players, and, for example, a competing game can be played not just by players at the same location but by game players all over Japan.

However, with such a competing game using communication, since the opponent is not at the same location as a game player, the game player cannot readily feel the competition in a realistic manner. This is one factor that prevents the enjoyment of a game from lasting. Effects, which could make game players feel the existence of other players realistically, are thus desired.

### SUMMARY OF THE INVENTION

The present invention has been made in view of the above issues, and an object thereof is to provide a gaming system and a gaming server, by which enjoyment can be sustained.

In order to achieve this object, the present invention provides the following.
(1) A gaming system providing a game participated by a plurality of game players comprising: a plurality of gaming terminals, each having an operating part operable by a game player; and a gaming server transmitting and receiving data concerning the game to and from the plurality of gaming terminals, wherein the gaming server comprising: game result storage means storing game results concerning the game for each of the plurality of game players; ranking determining means, determining a plurality of types of rankings concerning the game based on the game results stored by the game result storage means; ranking information setting means, selecting, from among the plurality of types of ranking information determined by the ranking determining means, desired ranking information in accordance with a player operation of the operating part of a gaming terminal among the plurality of gaming terminals; and transmitting means, transmitting the desired ranking information, set by the ranking information setting means, to a gaming terminal among the plurality of gaming terminals.
(2) The gaming system according to (1), further comprising address information managing means, managing address information concerning the plurality of gaming terminals corresponding to the respective game players.
(3) The gaming system according to (1), wherein the gaming server further comprises a game player group determining means, determining a game player group of a plurality of game players, on the basis of the desired ranking information set by the ranking information setting means.
(4) A gaming system providing a game participated by a plurality of game players comprising: a plurality of gaming terminals, each having an operating part operable by a game player; and a gaming server transmitting and receiving data concerning the game to and from the plurality of gaming terminals, wherein the gaming server comprising: personal information managing means, managing personal information concerning the plurality of game players; special game request reception means, receiving special game holding request information including specific personal information from a game player; game player selecting means, selecting, based on the specific personal information and the personal information managed by the personal information managing means and from among the plurality of game players, game players having a specific relationship with the specific personal information are selected; and special game guidance means, transmitting special game participation offer and guidance information to a player selected by the game player selection means.
(5) The gaming system according to (4), further comprising address information managing means, managing address information concerning the plurality of gaming terminals corresponding to the respective game players.
(6) The gaming system according to (4), wherein the game player selecting means selects, from among the game players of gaming terminals having access to the gaming server, the game players to which the conditions of the specific personal information apply.
(7) A gaming server, transmitting and receiving data concerning a game to and from a plurality of gaming terminals, each having an operating part operable by a game player, comprising: game result storage means, storing game results concerning the game for each of the plurality of game players; ranking determining means, determining a plurality of types of rankings concerning the game based on the game results stored by the game result storage means; ranking information setting means, selecting, from among the plurality of types of ranking information determined by the ranking determining means, desired ranking information in accordance with the player operation of the operating part of a gaming terminal among the plurality of gaming terminals; and transmitting means, transmitting the desired ranking information, set by the ranking information setting means, to a gaming terminal among the plurality of gaming terminals.
(8) The gaming server according to (7), further comprising game player group determining means, determining a game player group of a plurality of game players on the basis of the plurality of desired ranking information set by the ranking information setting means.
(9) A gaming server, transmitting and receiving data concerning a game to and form a plurality of gaming terminals, each having an operating part operable by a game player, comprising: personal information managing means, managing personal information concerning the plurality of game players; special game request reception means, receiving, special game holding request information, including specific personal information, from a game player; game player selecting means, selecting, based on the specific personal information and the personal information managed by the personal information managing means from among the plurality of game players, game players having a specific relationship with the specific personal information are selected; and special game guidance means, transmitting special game participation offer and guidance information to a player selected by the game player selection means.
(10) The gaming server according to (9), wherein the game player selecting means selects, from among the game players of gaming terminals having access to the gaming server, the game players to which the conditions of the specific personal information apply.
(11) A gaming server, transmitting and receiving data concerning a game to and form a plurality of gaming terminals, each having an operating part operable by a game player, comprising: a controller executing a computer program; and a storage unit, wherein the controller stores the game results concerning the game for each of the plurality of game players in the storage unit, determines a plurality of types of rankings concerning the game based on the game results stored in the storage unit, selects, from among the plurality of types of ranking information that have been determined, desired ranking information, which are desired by a game player, in accordance with the player operation of the operating part of a gaming terminal among the plurality of gaming terminals, and transmits the desired ranking information to the gaming terminal among the plurality of gaming terminals.
(12) A gaming server, transmitting and receiving data concerning a game to and from a plurality of gaming terminals, each having an operating part operable by a game player, comprising: a controller executing a computer program; and a storage unit, wherein the storage unit stores address information, concerning the plurality of gaming terminals corresponding to the respective players, and personal information, concerning the plurality of game players, and the controller receives special game holding request information, includes specific personal information, from a game player, selects, based on the personal information stored in the storage unit and from among the plurality of game players, game players to which a specific relationship with the specific personal information are selected; and transmits special game participation offer and guidance information to the selected game players.

With the present invention of (1), (7), or (11), not just one but a plurality of types of ranking information are arranged to be displayed. Thus instead of just a fixed type of ranking information, ranking information based on various viewpoints can be displayed, and a game, which can enhance the gaming motivation a game player, can thus be provided.

Also, by displaying the types of ranking information that are desired by a game player instead of displaying all of the types of ranking information that are set, the ranking information can be displayed in a simple manner even if there are a large number of types of ranking information. A game, which can enhance the gaming motivation a game player according to the circumstances of each game player, can thus be provided.

Furthermore, the types of ranking information to be displayed can be set according to operations by a game player, and by storing the setting state, the troublesomeness of operation can be alleviated.

Though the abovementioned "game" includes various types of games in general, it is preferably a competing game played with other game players, and among such games, a competing game involving tactics, such as a mah-jong game, card game, etc., is optimal.

With the present invention of (3), (8), or (12), based on the types of ranking information desired by the respective game players, game players who have set the same ranking information can be determined as a game player group. By thus bringing together game players who share the same viewpoints concerning a game as a game player group, a game that is in accordance with the interests of the respective players can be provided and a new gaming property can be provided.

Also with the present invention, by not just selecting players with the same ranking information as a game player group but by selecting, for example, players, who have set different types of ranking information, to form a game player group, a new gaming property can be provided. Furthermore, even with different types of ranking information, by making game players of ranking information of extreme opposite types be contained in a game player group, an even newer gaming property can be provided.

By the present invention of (4) or (9), it becomes possible for a special game to be carried out in accordance with the requests of a game player him/herself. By facilitating the holding of a special game that reflects the intentions of a game player, a game can be provided with which the opportunities for winning a high ranking or title or appellation in a special game can be expanded, the holding of a special game can be performed without making a player feel monotonousness or dullness, and the enjoyment of holding and participating in a special game is increased.

With the present invention of (5) or (10), special game participation offer and guidance information is transmitted only to game players, to which, based on personal information, the conditions of specific personal information apply. The special game participation offer and guidance information is thus not notified to game players who do not meet the special game participation conditions but are notified only to game players who meet the special game participation conditions.

Further features of the invention, its nature, and various advantages will be more apparent from the accompanying drawings and the following detailed

### description of the invention.

### BRIEF DESCRIPTION OF THE DRAWINGS

Fig. 1 is a schematic diagram showing the outline of a gaming system according to an embodiment of the present invention.
Fig. 2 is a schematic diagram showing the outline of gaming terminals according to the embodiment of the present invention.
Fig. 3 is a schematic diagram showing the outline of a gaming terminal according to the embodiment of the present invention.
Fig. 4 is a block diagram showing the electrical configuration of a gaming server according to the embodiment of the present invention.
Fig. 5 is a diagram showing a personal information table of the gaming server according to the embodiment of the present invention.
Fig. 6 is a diagram showing the personal information table of the gaming server according to the embodiment of the present invention.
Fig. 7 is a diagram of a personal ranking table of the gaming server according to the embodiment of the present invention.
Fig. 8 is a diagram of a personal yakuman winning combination record table of the gaming server according to the embodiment of the present invention.
Fig. 9 shows a special game grade collation table that serves as a basis for determining the grade of a special game according to the embodiment of the present invention.
Fig. 10 is a diagram showing the configuration of a database of the gaming server according to the embodiment of the present invention.
Fig. 11 is a diagram showing the configuration of the database of the gaming server according to the embodiment of the present invention.
Fig. 12 is a block diagram showing the electrical configuration of a gaming terminal according to the embodiment of the present invention.
Fig. 13 is a block diagram showing the electrical configuration of a gaming terminal according to the embodiment of the present invention.
Fig. 14 is a block diagram showing the electrical configuration of a gaming terminal according to the embodiment of the present invention.
Fig. 15 is a diagram of a gaming card according to the embodiment of the present invention.
Fig. 16 is a diagram showing an image displayed on a display device of a gaming terminal according to the embodiment of the present invention.
Fig. 17 is a diagram showing an image displayed on the display device of the gaming terminal according to the embodiment of the present invention.
Fig. 18 is a diagram showing an image displayed on the display device of the gaming terminal according to the embodiment of the present invention.
Fig. 19 is a diagram showing an image displayed on the display device of the gaming terminal according to the embodiment of the present invention.
Fig. 20 is a diagram showing an image displayed on the display device of the gaming terminal according to the embodiment of the present invention.
Fig. 21 is a diagram showing an image displayed on the display device of the gaming terminal according to the embodiment of the present invention.
Fig. 22 is a diagram showing an image displayed on the display device of the gaming terminal according to the embodiment of the present invention.
Fig. 23 is a diagram showing an image displayed on the display device of the gaming terminal according to the embodiment of the present invention.
Fig. 24 is a diagram showing an image displayed on the display device of the gaming terminal according to the embodiment of the present invention.
Fig. 25 is a diagram showing an image displayed on the display device of the gaming terminal according to the embodiment of the present invention.
Fig. 26 is a diagram showing the types of yakuman winning combination rankings according to the embodiment of the present invention.
Fig. 27 is a diagram illustrating a rewritable magnetic card used for game player authentication in the embodiment of the present invention.
Fig. 28 shows a flowchart of control processes executed in the gaming system according to the embodiment of the present invention.
Fig. 29 shows a flowchart of control processes executed in the gaming system according to the embodiment of the present invention.
Fig. 30 shows a flowchart of control processes executed in the gaming system according to the embodiment of the present invention.
Fig. 31 shows a flowchart of control processes executed in the gaming system according to the embodiment of the present invention.
Fig. 32 shows a flowchart of control processes executed in the gaming system according to the embodiment of the present invention.
Fig. 33 shows a flowchart of control processes executed in the gaming system according to the embodiment of the present invention.
Fig. 34 shows a flowchart of control processes executed in the gaming system according to the embodiment of the present invention.
Fig. 35 shows a flowchart of control processes executed in the gaming system according to the embodiment of the present invention.
Fig. 36 shows a flowchart of control processes executed in the gaming system according to the embodiment of the present invention.
Fig. 37 shows a flowchart of control processes executed in the gaming system according to the embodiment of the present invention.
Fig. 38 shows a hardware block diagram of a gaming server according to another embodiment of the present invention.

### DESCRIPTION OF THE PREFERRED EMBODIMENT

A preferred embodiment of the present invention shall now be described with reference to the drawings.

As an embodiment of the present invention that is preferable for gaming terminals, an example of applying the present invention to gaming terminals for playing mah-jong shall be described. However, the present invention is not limited to being applied to gaming terminals for playing mah-jong (so-called video mah-jong) but may also be applied to gaming terminals for playing black jack, Japanese flower cards, and other card games, that is, to terminals for games played by a plurality of players and in which winning is determined by combinations of graphic patterns.

### [System configuration]

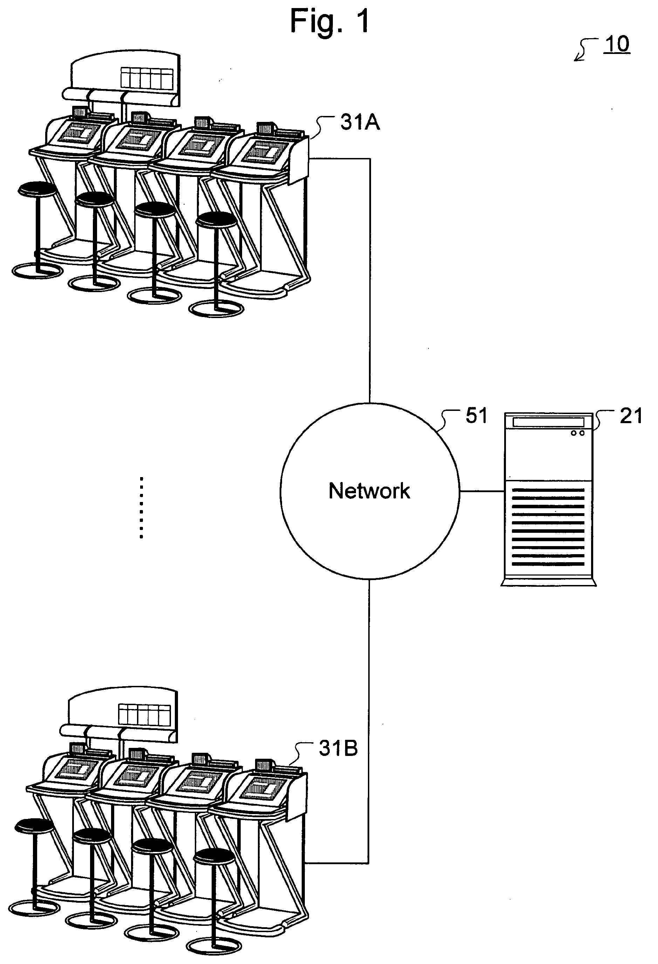

Fig. 1 is a schematic diagram showing the entirety of a gaming system 10, which is a preferred embodiment of the present invention.

With the gaming system 10, shown in this Fig. 1, a gaming server 21, which controls information concerning a game, is made connectable to a network 51, comprising the Internet, private lines, providers, audio communication stations, base stations and communication satellite stations for cell phones, etc. The gaming server 21 is enabled to communicate via the network 51.

Though in Fig. 1, the gaming server 21 is the only server connected to the network 51, the present invention is not limited to this configuration. That is, the functions of the gaming server 21 may be divided among and implemented in a plurality of servers.

A plurality of gaming terminal groups 31A, 31B, ... are made connectable to the network 51. The gaming server 21 is accessible from these plurality of gaming terminal groups 31A, 31B, ...

Though in the present embodiment, the respective gaming terminal groups 31A, 31B, ... are game-dedicated gaming terminals 31A, 31B, ..., the present invention is not limited thereto. That is, it is sufficient that the gaming terminal groups 31A, 31B, ... be terminal devices by which game players can access the network 51, and the gaming terminal groups 31A, 31B, ... may be a configuration that includes various terminal devices, such as desktop personal computers, notebook personal computers, mobile personal computers, and other personal computers, cell phones, PDAs (Personal Digital Assistants), etc.

As a method of access, transactions of packets, prepared according to TCP/IP protocols, are carried out between the respective gaming terminal groups 31A, 31B, ... and the Internet or other network 51 (host computer of a provider) by using dial-up PPP (Point-to-Point Protocol) connection, etc., and in the network 51 (between the host computer and the gaming server 21) TCP/IP protocol communications are carried out. Address information, based on an IP address or TCP number, etc., for specifying the respective gaming terminal groups 31A, 31B, ... or the respective gaming terminals 41A, 41 B, 41C, 41D, ... that make up the terminal groups, are stored by the gaming server 21.

The gaming terminal groups 31A, 31B, ... are thereby enabled to acquire various information from the gaming server 21 and can present various information to the gaming server 21.

For these communications, various communication schemes may be used. For example, for cell phones and PDAs, the major communications schemes used are digital schemes using radio waves to supply data, such as the TDMA (Time Division Multiple Access) scheme and the CDMA (Code Division Multiple Access) scheme. Connection with the gaming server 21 by such radio waves is accomplished via base stations located in various locations. The communication lines linking the various device in the network 51, etc., may be cable lines or wireless.

Also, as the network 51 connecting the gaming server 21 with the gaming terminal groups 31A, 31B, ... installed at various facilities, either a cable arrangement, such as a configuration using a dedicated line, a VPN (Virtual Private Network), which is realized on the Internet using a public network, or a wireless arrangement, such as TDMA (Time Division Multiple Access) and CDMA (Code Division Multiple Access), wherein data are transacted by being carried on electromagnetic waves between communication terminals and base stations, may be employed.

Though with the present embodiment, the gaming system is arranged from the gaming server 21, the network 51, and the gaming terminal groups 31A, 31B, ..., the present invention is not limited to this configuration. That is, the system may be equipped with other devices, such as a charging server that performs charging concerning a game.

Furthermore, though with the present embodiment, the gaming system is arranged from the gaming server 21, the network 51, and the gaming terminal groups 31A, 31B, ..., the present invention is not limited to this configuration. That is, other devices may be connected to the system, or any of the abovementioned devices may be omitted.

Preferably, this embodiment's game is not a game that is played with virtual game players controlled by a computer, but is a game that is played by real game players. In this case, for example, the gaming server 21 may be omitted. Furthermore, connections may be arranged so as to enable communication only among the gaming terminal groups 31A, 31B, ..., without using the network 51. In this case, the functions of the gaming system 10 may be integrated in a single device or implemented in separate devices.

### [Configuration of a gaming terminal group]

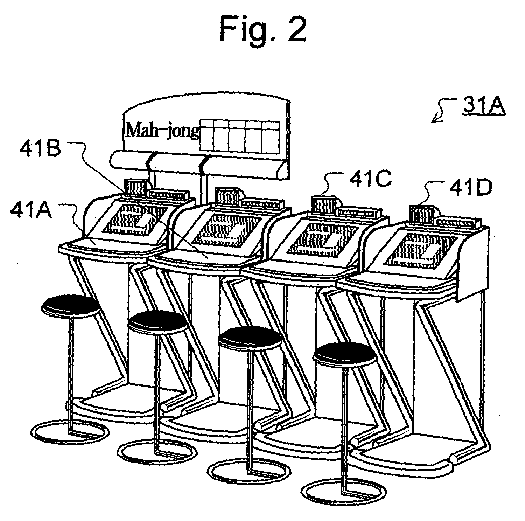

Fig. 2 is a schematic diagram showing the overall configuration of the gaming terminal group 31A according to the preferred embodiment of the present invention. Though with Fig. 2, the gaming terminal group 31A shall be described as an example, the other gaming terminal group 31B has the same functions and description thereof shall thus be omitted.

The gaming terminal group 31A is arranged by linking, for example, four gaming terminals 41 (41A to 41D). Each gaming terminal 41 is enabled to communicate with the gaming server 21 that is connected to the network 51, comprising the Internet, private lines, providers, audio communication stations, base stations and communication satellite stations for cell phones, etc.

Though four gaming terminals 41 are linked in the present invention, the present invention is not limited thereto. It is sufficient that gaming terminals 41 are enabled to communicate with each other, and a plurality of gaming terminals may be arranged in linkage or each gaming terminal may be arranged as a stand-alone unit without such linkage.

Also, the configuration does not have to be one in which four terminals make up one terminal group, and each terminal may be installed and connected singularly to the network 51 to perform a game.

### [Configuration of a gaming terminal]

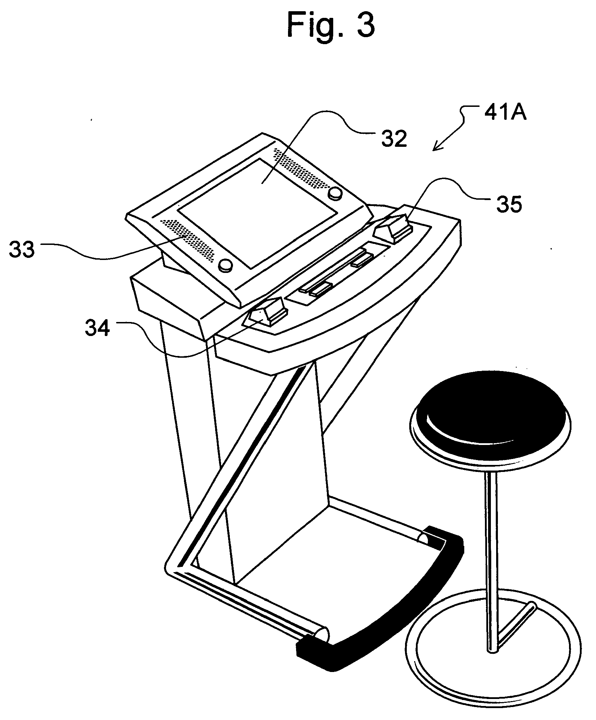

Fig. 3 is schematic diagram showing the configuration of the gaming terminal 41A according to the preferred embodiment of the present invention. Though the gaming terminal 41A shall be described as an example, the other gaming terminals 41B, 41C, and 41D have the same functions and description thereof shall thus be omitted.

The gaming terminal 41A is equipped with a display device 32 that faces a game player and displays images concerning the game.

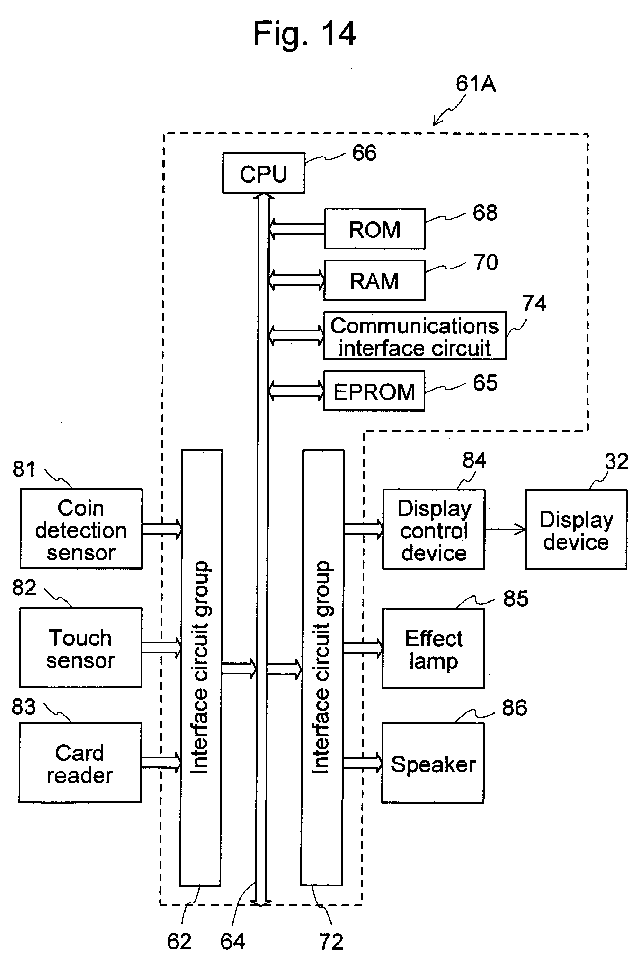

A touch sensor 82 (see Fig. 14) is disposed on the surface of this display device 32 and enables operations concerning the game to be carried out in accordance with the position and timing of touching.

A speaker 86 (see Fig. 14) is built into the gaming terminal 41A. Sounds are thereby generated through speaker grills 33 formed at the respective sides of the display device 32.

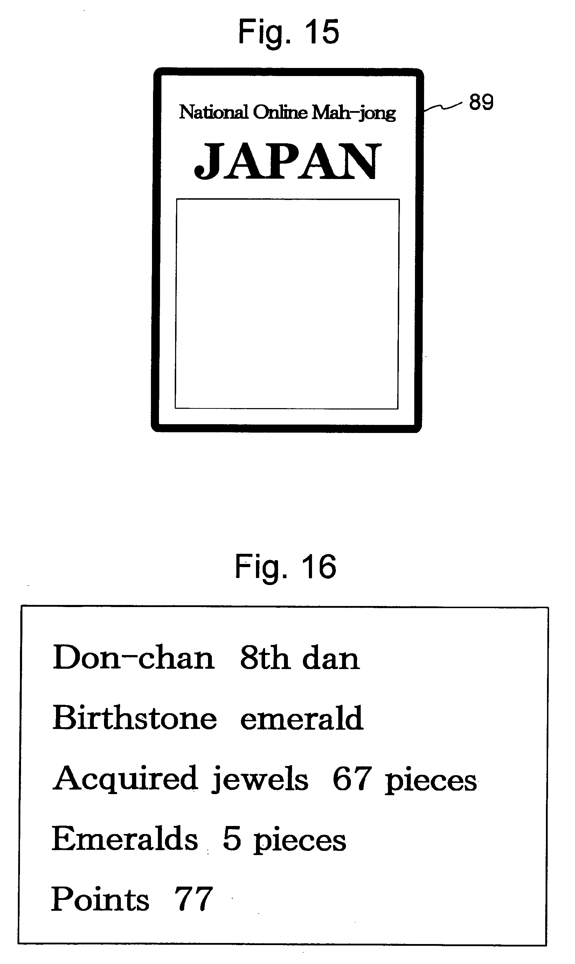

Furthermore, a card insertion opening 34, for insertion of a gaming card 89 (see Fig. 15), is provided at the game player side (in the direction in which a chair is drawn) of the display device 32. The gaming card 89 is for game player authentication and enables identification of a game player and comprises a rewritable magnetic card. The identification information stored in the gaming card 89 can be read by means of a card reader/writer 83 (see Fig. 14), built into the gaming terminal 41A.

Though with the present embodiment, identification information, enabling identification of a game player, is read by a card reader/writer 83, the present invention is not limited thereto. That is, any medium, such as an IC-chip integrated card, etc., may be used as long as game player information can be recorded therein. Furthermore, for authentication in the present invention, any of various methods, such as password authentication, which is carried out by input of a password, etc., fingerprint authentication, in which the fingerprint of a game player is read, iris authentication, in which the iris pattern of a game player is read, etc., may be included as long as the method enables the input of identification information that in turn enables identification of a game player.

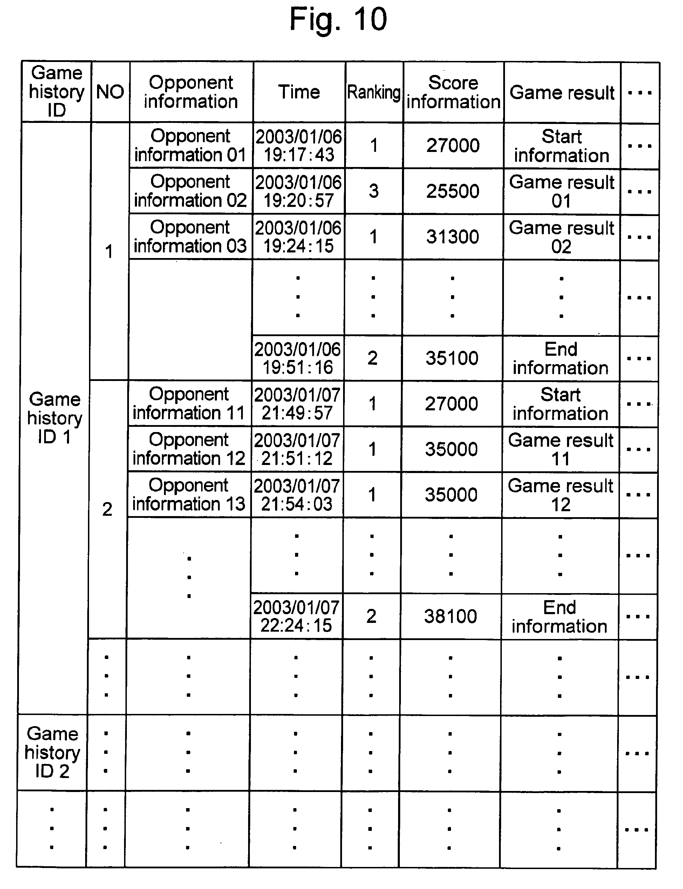

A coin inlet 35, into which coins for playing the game can be inserted, is provided on the game player side (in the direction in which a chair is drawn) of the display device 32. Coins are detected by means of a coin detection sensor 81 (see Fig. 10) that is built into the gaming terminal 41A.

An effect lamp 85 (see Fig. 10) is provided on the gaming terminal 41A, and this is turned on and off according to game results and game contents.

Since a gaming system for providing a mah-jong game is employed in the present embodiment, an effect is carried out only when the game has ended and the game results are obtained. However, the effect lamp may be driven not just according to the game results but in accordance with game modes, game situations, game history, and game contents as well. Alternatively, the effect lamp may be omitted.

### [Electrical configuration of the gaming server]

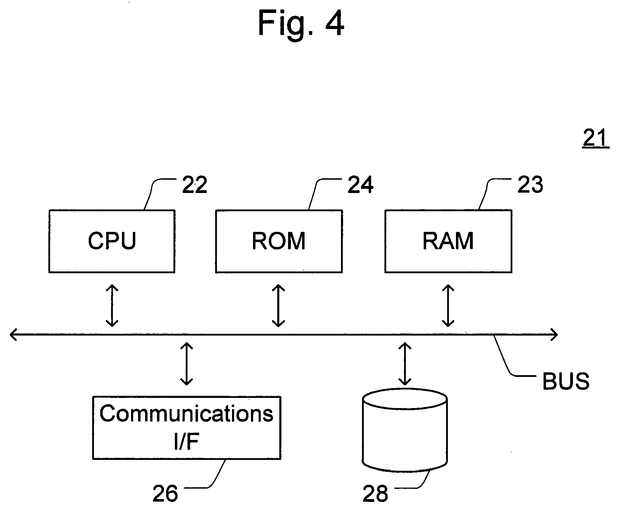

Fig. 4 is a block diagram showing a control circuit of the gaming server 21 according to the preferred embodiment of the present invention.

With the gaming server 21, a CPU 22, a RAM 23, a ROM 24, a communication I/F 26, and a storage unit 28, arranged as RAID (Redundant Arrays of Inexpensive Disks), etc., are connected by a bus. The storage unit 28 comprises a hard disk in which is installed a database that stores personal information (personal information table, personal ranking table, and personal yakuman winning combination record table), to be described later.

In the ROM 24 of the gaming server 21 shown in Fig. 4 are stored programs for managing the gaming system 10 shown in Fig. 1, that is, to be more specific, programs for performing communication with the respective gaming terminal groups 31A, 31B, ..., programs for providing various services, etc.

Though the programs are stored in the ROM 24 in the present embodiment, the present invention is not limited thereto. The programs may be stored in another storage medium and, for example, may be stored in the storage unit 28. Furthermore, the programs may be stored in both the ROM 24 and the storage unit 24, or the programs may be stored in a storage medium, such as a CD-ROM, etc., and data may be read out from the CD-ROM or other storage medium.

The CPU 22 is a controller that executes various operations in accordance with these programs stored in the ROM 24. The CPU 22 temporarily records these programs themselves and the variables, data, etc., generated by the operational programs in the RAM 23 and controls the respective circuit parts in accordance with the operations. Though details shall be described later, the CPU 22 is arranged to execute various processes in accordance with the control programs and the various contents and programs stored in the storage unit 28. That is, the CPU 22 receives information from the respective gaming terminal groups 31A, 31B, ... that are transmitted from the network 51 and via the line connected to the communication I/F 26 and stores these information in the RAM 23 and the storage unit 28. Here, the CPU 22 and the communication I/F 26 function as the transmitting means and the reception means of the gaming server 21.

### [Configuration of the storage unit of the gaming server]

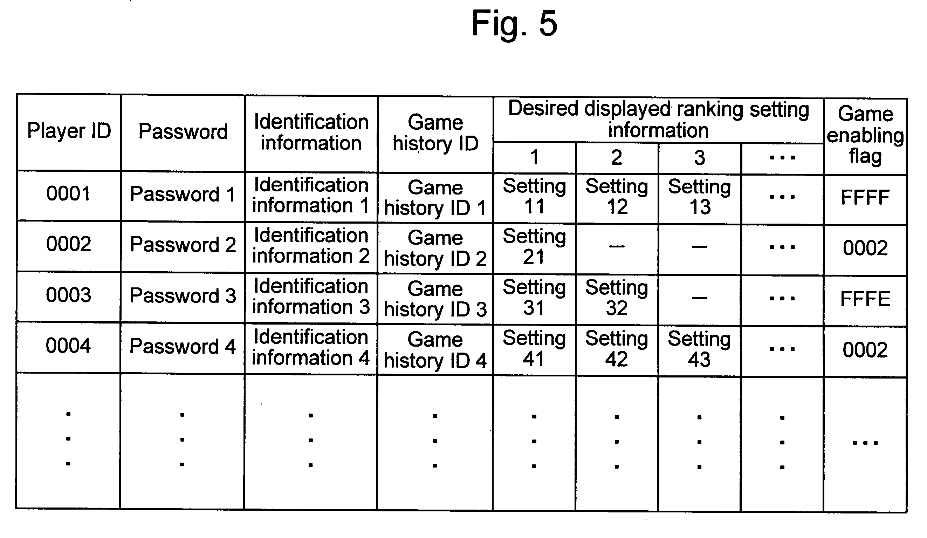

In the database of the abovementioned storage unit 28 are stored various tables that indicate the attributes of players as shown in Fig. 5, Fig. 6, Fig. 7, and Fig. 8.

Based on the information in these tables, the gaming server 21 of the present invention's gaming terminal system performs authentication of game players who intend to play the game on the gaming terminal groups 31A and 31 B. Also, the personal information and the game playing history of these game players are determined to generate a special game.

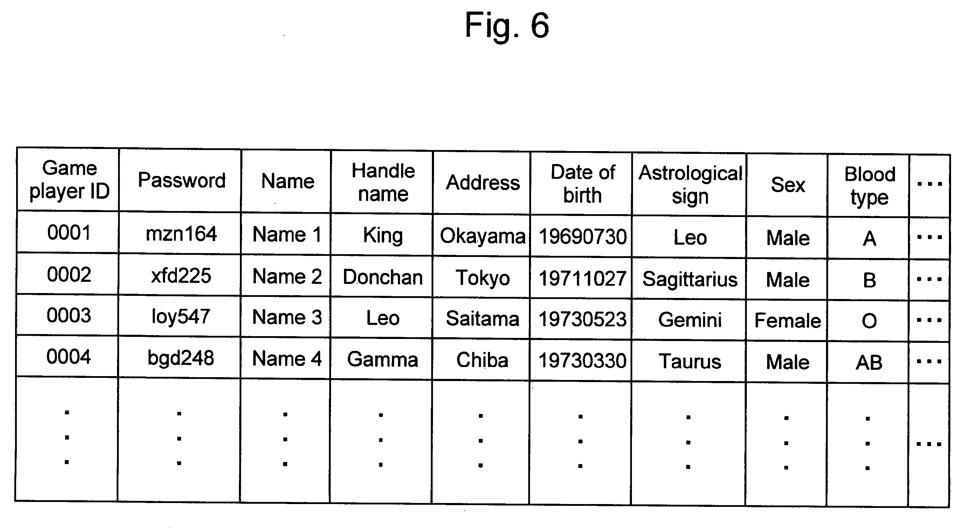

Fig. 5 and Fig. 6 show a personal information table. As these personal information, the personal information for playing the game are stored in an associated manner, and various information are associated with such items as "game player ID" (referred to as "player ID" in Fig. 5), "password," "identification information," "game history ID," "desired displayed ranking setting information," "game enabling flag" (referred to as "game enabling F" in Fig. 5). The storage unit 28 thus functions as the personal information managing means.

As the "game history ID," an ID number, which indicates the history of the game results of the corresponding game player, is recorded.

The "desired displayed ranking setting information" indicate the desired ranking information that are displayed in accordance with each game player and indicate the types and number of the ranking information as shall be described later. Also as shall be described later, this information is used to generate a certain game player group. Up to four types of information can be set as these information, and "-" in Fig. 5 indicates empty data.

Though with the present embodiment, due to the size of the display screen on the display device, the number of types of the desired displayed ranking setting information is restricted so that only up to four types of desired displayed ranking setting information can be set, the present invention is not limited thereto. That is, arrangements may be made to enable the setting of a single type or plurality of types of the desired displayed ranking setting information besides four types. Obviously, arrangements may be made so as not to restrict the number of settings. Also, in a state in which settings are not made, standard ranking information is displayed as the default settings.

The "game enabling flag" indicates the game situation and the game player group of the corresponding game player. Based on the information indicated by this flag, a game player group is formed and the type of game player group can be identified.

For example, when the flag is set to "FFFF" as shown in Fig. 5, it indicates an unconnected state, that is, a state in which a game cannot be played, and when the flag is set to "FFFE," it indicates that though the connection is made, the game is not being played, that is, it indicates a "standby state." When the flag is set to another numerical value (for example, "0002"), it indicates that a game is being executed and indicates the number of the game player group. Also, when the same numerical value is set, a game is being executed for the same game player group.

Fig. 6 shows a continuing part of the personal information table. In this table are positioned passwords, names, handle names (nicknames used in playing a game), addresses, birth dates, astrological signs, sexes, blood types, and other information that identify individuals. When a game player participates in a game, game player authentication is performed, and this table is referenced in the process of this game player authentication. This table is also referenced for determination whether or not a special game is to be generated when a game is started and, when the holding of a special game is requested by a game player, for selecting game players who meet the conditions of participation in that special game.

The abovementioned personal information is preferably collected for many items in order to expand the possibilities of holding special games. The connection address information of the gaming terminal groups 31A, 31B, ... or the respective gaming terminals 41B, 41C, 41D, ... that are connected to the gaming system 10 are also stored in the database. The connection address information comprise, for example, TCP numbers and IP addresses of the TCP/IP protocol, which is a standard protocol for the Internet. The gaming terminal that is operated by a game player can thus be specified.

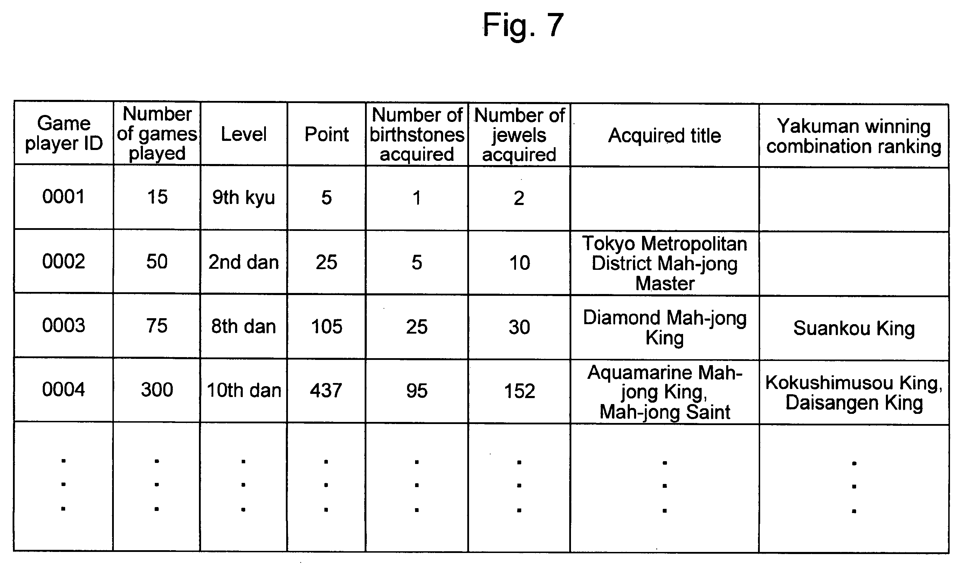

Fig. 7 shows a personal ranking table. With the personal ranking table, the histories of the gaming records of individual game players are managed. With this table, just the gaming records, such as the number of games played, level (kyu or dan), number of points won, number of birthstones acquired, number of jewels (besides birthstones) acquired, acquired title, yakuman winning combination ranking, etc., are managed. This table is referenced for determination whether or not a special game is to be generated when a game is started and, when the holding of a special game is requested by a game player, for selecting game players who meet the conditions of participation in that special game.

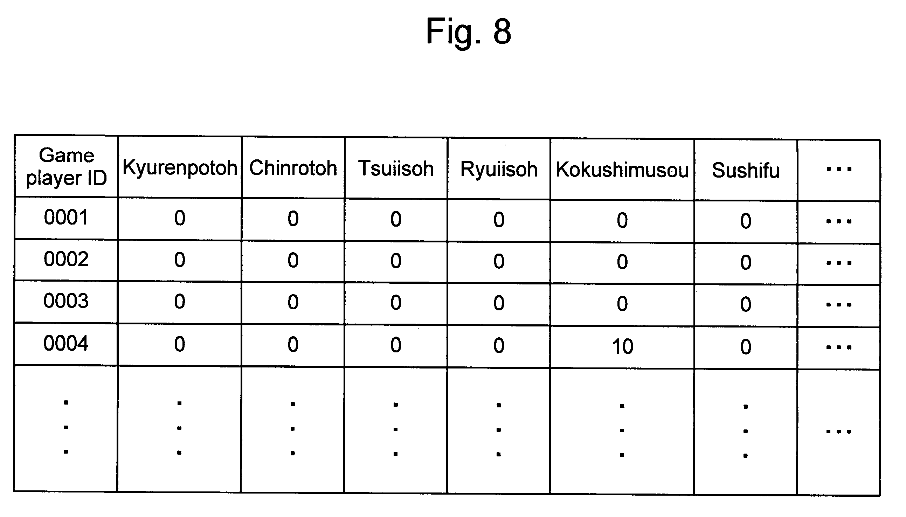

Fig. 8 shows personal yakuman winning combination records by which the history of records of completion of yakuman winning combinations is managed for each individual game player. The number of times of completion is managed according to the type of yakuman winning combination, and this table is referenced in a personal record renewal process by the gaming server 21. For each yakuman winning combination, the game player with the highest number of times of completion is awarded a title, and this information is registered as a yakuman winning combination ranking item in the personal ranking table.

As with the above-described personal information table and the personal ranking table, this table is also referenced for determination whether or not a special game is to be generated when a game is started. This table is also referenced, when the holding of a special game is requested by a game player, for selecting game players who meet the conditions of participation in the special game.

With the present embodiment, the recording of the number of times of completion and ranking may be applied not only to yakuman winning combinations but also to winning combinations besides yakuman winning combinations.

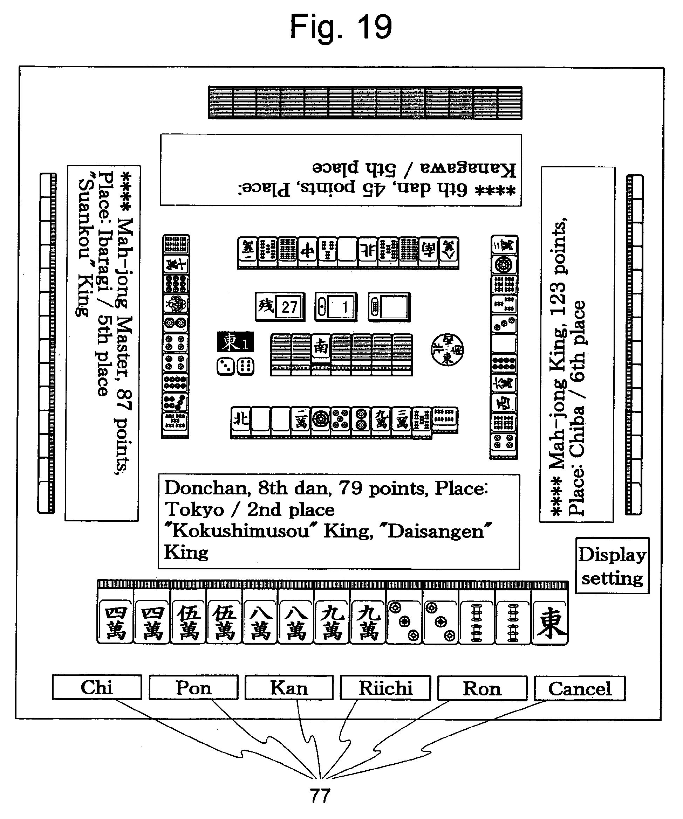

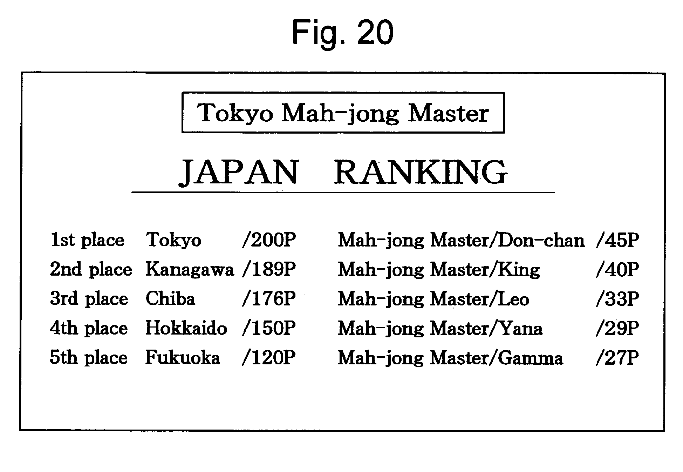

With the game by the present invention, handle names are displayed as the names of the game players in all cases (see Fig. 19 and Fig. 20).

Also with the present embodiment, a communication destination database, having identification information for identifying the gaming terminal groups 31A, 31B, ... as an item, is stored in the storage unit 28. By referencing the communication destination database, communication among gaming terminals 41 is enabled. Also, in the process of communication, the abovementioned game enabling flag is set.

A game history database shown in Fig. 10 is stored in the abovementioned storage unit 28. The storage unit 28 thus realizes an example of the function of the game result storage means.

In this game history database are stored the histories of the game results of game players who are registered in the personal information database and have played the game. Various information, such as the abovementioned "game history ID," "game result group No. (referred to as "NO" in Fig. 10)," "opponent information," "time," "ranking," "score information," "game result," etc., is associated with the items of these histories.

The "game history ID" is stored in a manner that is associated with the personal information table, shown in Fig. 5 and Fig. 6.

The "opponent information" indicate the opponents in each mah-jong game, and the "game player IDs," shown in Fig. 5, are stored as the opponent information.

The "game history ID" and "opponent information" is recorded for each predetermined period, that is, for each so-called "han-chan" round in a mah-jong game, and the "time," "ranking," "score information," "game result," etc., is recorded in correspondence to each single game, or so-called "kyoku" round in each han-chan round.

With the "game result," the results of a game are put in the form of data. With the example shown in Fig. 10, "start information" indicates data at the point of the start of a game and "end information" indicates data at the point of the end of a game. Each of the other "game result 01," etc., indicates the game results for each kyoku round. Information, including "riichi" and "pinfu" and other winning combinations as well as "tenpai" and other information that, though not being a winning combination, indicate game results are put in the form of data and recorded.

Also, the "ranking" indicates the ranking at the end of each kyoku round in each han-chan round. The "score information" indicates the score at the end of each kyoku round in each han-chan round.

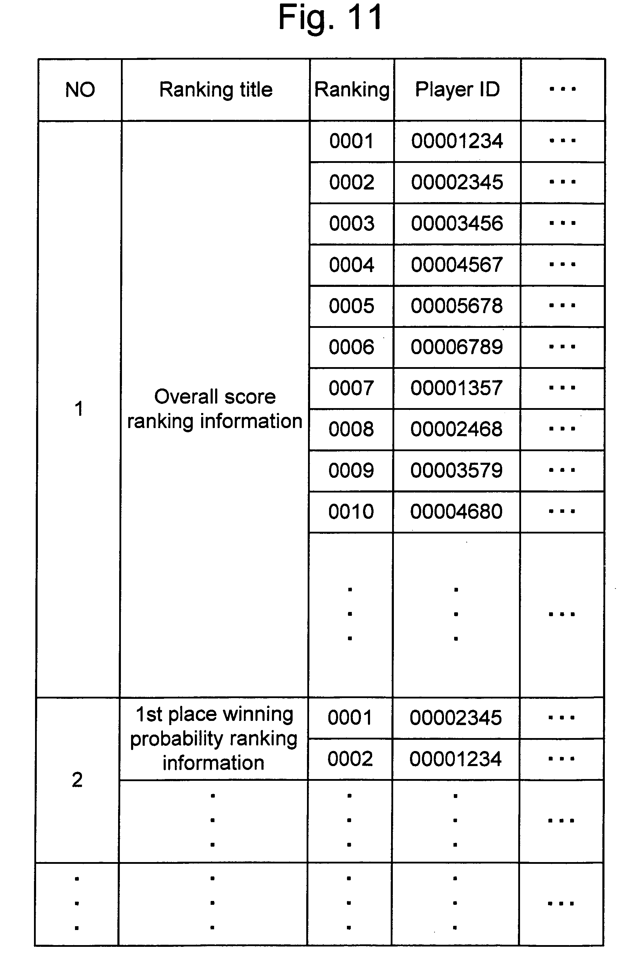

Also, a ranking information database shown in Fig. 11 is stored in storage unit 28.

This ranking information database is generated from the above-described personal information database and game history database, and various information, such as the abovementioned "ranking type No. (referred to as "NO" in Fig. 11)," "ranking title," "ranking," "ranking player ID (referred to as "player ID" in Fig. 11)," etc., is associated with the items of this database.

The "ranking type No." is a number that is attached to each of the plurality of types of ranking information.

A "ranking title" is stored in association with each of these ranking type Nos. In addition to the "comprehensive score ranking information" and "first-place winning probability ranking information, "which is shown in Fig. 11, the types of ranking titles include those of such comprehensive ranking information as "region-wise ranking information," "highest-score ranking information," "total-number-of-games-played ranking information," and "winning percentage ranking information," as well as those of ranking information concerning winning combinations, such as "pinfu probability ranking information," "sanshoku dojun ranking information," and various other types of ranking information.

Ranking information based on the comparison of the game results of a game player and the game results of other game players are preferable in that the game player is thereby enabled to recognize his/her game results from an objective viewpoint.

Also, for each of such ranking type Nos., a plurality of "rankings" are stored and a "ranking player ID" is associated with each "ranking." As these "ranking player IDs," the game player IDs in the personal information database are stored.

Though in the present embodiment, the various above-described types of databases are stored in the storage unit 28, the present invention is not limited thereto. That is, arrangements may be made so as not store a database, such as the abovementioned personal information database, or other types of databases may be stored.

### [Configuration of a gaming terminal group]

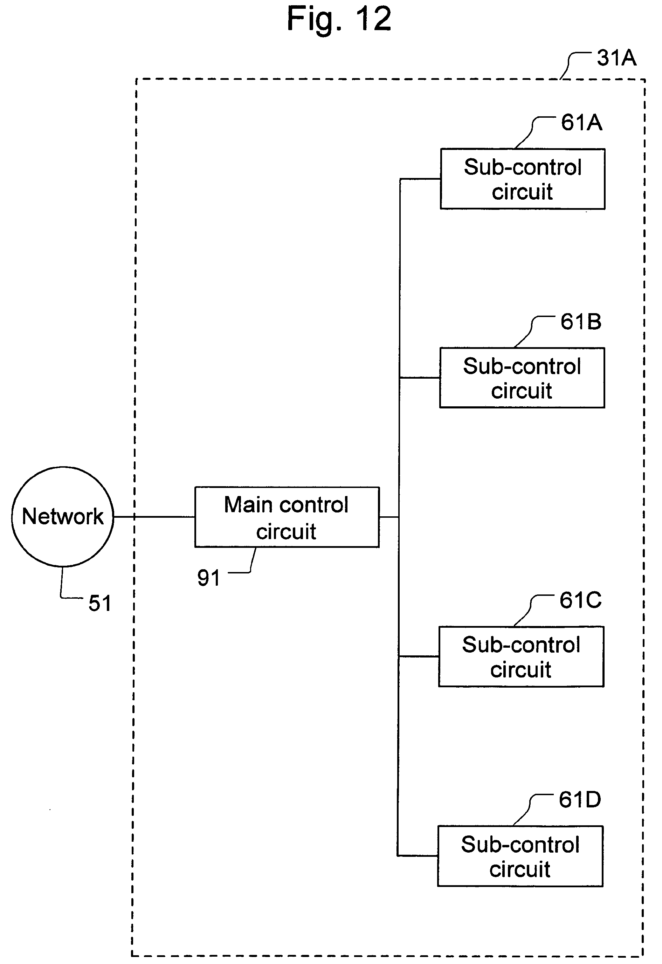

Fig. 12 is a block diagram showing the configuration of a control circuit of the gaming terminal group 31A according to the preferred embodiment of the present invention.

The gaming terminal group 31A is equipped with a terminal group control circuit 91, to which a plurality of terminal control circuits 61 (61A to 61D) are connected in a manner enabling communication.

The terminal group control circuit 91 connects the plurality of terminal control circuits 61 to the gaming server 21 via the network 51 in a manner enabling communication and connects the plurality of terminal control circuits to each other in a manner enabling communication. Details shall be described later.

Each terminal control circuit 61 is built into a single gaming terminal 41 and is connected via the terminal group control circuit 91 to the other gaming terminals 41 in a manner enabling communication. Each terminal control circuit 61 is connected to the gaming server 21 in a manner enabling communication via the terminal group control circuit 91 and the network 51, and may also be connected to other gaming terminal groups 31 in a manner enabling communication via the gaming server 21, and in this case, is connected in a manner enabling communication to other gaming terminals 41 that are included in the other gaming groups 31. Details shall be described later.

### [Electrical configuration of a terminal group control circuit]

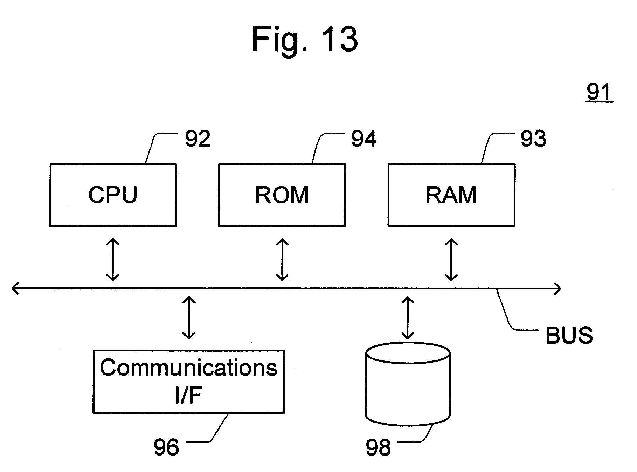

Fig. 13 is a block diagram showing the electrical configuration of a terminal group control circuit 91 according to the preferred embodiment of the present invention.

As shown in Fig. 13, in a terminal group control circuit 91, a CPU 92, a RAM 93, a ROM 94, a communication I/F 96, and a storage unit 93, arranged from RAID (Redundant Arrays of Inexpensive Disks), etc., are connected to a data bus.

The gaming server 21 of the present embodiment has only the minimum required configuration, and in cases where various functions are to be added, arrangements may be made to enable the connection of various devices.

For example, a lottery unit that generates a random number may be connected to the above-described configuration and arrangements may be made to perform various determination processes based on the random number generated by the lottery unit as described later.

In the ROM 94 of the terminal group control circuit 91 are stored a program for connecting with the gaming server 21, shown in Fig. 1, in a manner enabling communication, a program for connecting the plurality of terminal control circuits 61 to each other in a manner enabling communication, and other programs for providing various services.

Though in the present embodiment, programs are stored in the ROM 94, the present invention is not limited thereto. Programs may be stored instead in the storage unit 98 or programs may be stored in both the ROM 94 and the storage unit 98.

Also, though in the present embodiment, the plurality of terminal control circuits 61 are indirectly connected to the gaming server 21 via the terminal group control circuit 91 and the terminal group control circuit 91 controls the communication lines of the plurality of terminal control circuits 61 in a centralized manner, the present invention is not limited thereto. That is, each of the plurality of terminal control circuits 61 may instead be connected directly to the network 51, and in this case, the terminal group control circuit 91 may be omitted.

The CPU 92 executes various operations in accordance with the programs stored in the ROM 94. The CPU 92 temporarily records the programs themselves, the variables and data generated by the operating program, etc., in the RAM 93 and controls the respective circuit units in accordance with the operations.

Also in the present embodiment, the CPU 92 is enabled to communicate with the plurality of terminal control circuits 61A, 61 B, ..., 61 D and the network 51 via the communication I/F 96. The communication database, containing, as an item, the identification information for identifying the terminal control circuits 61A, 61B, ..., 61D and the gaming server 21, is stored in storage unit 28. Thus the CPU 92 references this communication database to enable communication among gaming terminals 41 and between each gaming terminal 41 and the gaming server 21.

### [Electrical configuration of a terminal control circuit]

Fig. 14 is a block diagram showing the electrical configuration of a terminal control circuit 61 according to a preferred embodiment of the present invention. Though the terminal control circuit 61A of the gaming terminal 41A is shown in this figure, the configuration is the same for the other gaming terminals 41 B, 41C, and 41 D.

The coin detection sensor 81 is connected to an interface circuit group 62 of the terminal control circuit 61A, and the interface circuit group 62 is connected to an I/O bus 64. The coin detection sensor 81 detects coins that are inserted from the coin inlet 35, and upon detecting a coin, supplies a predetermined detection signal to the interface circuit group 62. Upon receiving the predetermined detection signal, the interface circuit group 62 converts the detection signal to a predetermined detection information and transmits this information to the I/O bus 64. The I/O bus 64 is arranged for the input and output of data signals and address signals into and from the CPU 66.

A timer (not shown) is also equipped in the interior of the CPU 66.

The touch sensor 82, equipped on the display device 32, is also connected to the interface circuit group 62. Upon detecting a touch by a hand of game player, the touch sensor 82 outputs a touch detection signal to the interface circuit group 62 and thereafter, the corresponding touch detection information is supplied to the I/O bus 64.

The card reader/writer 83 is also connected to the abovementioned interface circuit group 62. When the card reader/writer 83 detects a gaming card 89 (see Fig. 11), which enables identification of a game player, the card reader/writer 83 reads various information, such as the identification information, etc., from the gaming card 89 and supplies the various information that have been read to the interface circuit group 62.

A ROM (read only memory) 68 and a RAM (random access memory) 70 are also connected to the abovementioned I/O bus 64. In the ROM 68 is recorded a control program for controlling the overall flow of the game in the terminal control circuit 61A. Also stored in the ROM 68 are initial data for the execution of the control program, a program for controlling the blinking operation pattern of the effect lamp 85, a program for controlling the display on the display device 32, a program for sound control of the speaker 86, etc.

Also with the present embodiment, a control program is stored by which an effect interval is generated when a predetermined position on the touch sensor 82 is touched at a predetermined timing.

The RAM 70 stores the values of flags and variables that are used in the abovementioned programs.

Furthermore, an interface circuit group 72 is connected to the I/O bus 64. The interface circuit group 72 is connected to a display control device 84, the effect lamp 85, the speaker 86, etc., and the interface circuit group 72 supplies driving signals and driving power so that the respective devices mentioned above are controlled in accordance with the results of computational processes by the CPU 66. The display device 32 is connected to the display control device 84. The display device 32 operates in linkage with the touch sensor 82. That is, a so-called touch panel system is configured wherein all predetermined operations of the game are carried out by the touch sensor 82 detecting the touching of touch display parts of the display device 32 by a game player and supplying corresponding signals to the CPU 66.

Furthermore, an EEPROM 65 is connected to the I/O bus 64. The EEPROM 65 is a device into which information can be written, and can hold various information without a power supply.

The terminal control circuit 61A of the present embodiment has only the minimum required configuration, and in cases where various functions are to be added, arrangements may be made to enable the connection of various devices.

For example, a lottery unit that generates a random number may be connected to the above-described configuration and arrangements may be made to perform various determination processes based on the random number generated by the lottery unit as shall be described later. In the present embodiment, this is executed by the CPU 66 in accordance with a program stored in the ROM 68.

A communication I/F 74 is also connected to the I/O bus 64. The communication I/F 74 is for performing communication with the gaming server 21, etc., via the terminal group control circuit 91, the network, etc.

Though in regard to the gaming terminal 41A, in which the above-described terminal control circuit 61 is installed, the use of the game-dedicated equipment by the present invention is assumed in the present embodiment, the present invention is not limited thereto. That is, the gaming terminal 41A may be an equipment that is connectable to a network, such as the Internet, and, for example, may be a personal computer (desktop type or notebook type), PDA (Personal Digital Assistant), a cell phone with a browser function, etc.

Also with the present embodiment, the gaming terminal 41A does not have a function of managing the progress of a game (mah-jong in the present invention) itself. The gaming terminal 41A is exclusively for performing input and output operations for the purpose of membership authentication for participation of a game player in a game and for the purpose of making a game progress and for performing effects during the progress of the game to appeal to the visual and auditory senses of a game player through the display device and the speaker.

### [Description of the game]

The mah-jong game that can be provided to game players by the above-described configuration shall now be described using Fig. 15 to Fig. 20.

As shown in Fig. 15, the abovementioned gaming card 89 is for enabling identification of a game player and has stored therein identification information that enable the identification of the player. To start a game, the gaming card 89 is inserted into the card insertion opening 34 so that the game can be played. The game can be started when this gaming card 89 is inserted into the card insertion opening 34 and a coin is inserted into the coin inlet 35.

As shown in Fig. 19, the present mah-jong game is a four-player mah-jong game, and, based on the operations of a game player, a selection can be made between a within-a-game-arcade mode, in which the game is played simply within a single gaming terminal group among gaming terminal groups 31A, 31 B, ..., and an online mode, in which the game is played among a plurality of the gaming terminal groups 31A, 31 B, ..., via the gaming server 21.

On the display screen, mah-jong tiles are displayed as shown in Fig. 19, and one's tiles on hand, discarded tiles, etc., are displayed in a manner enabling visual recognition of the graphic patterns drawn on the tiles.

An actual mah-jong game is a table game that is played using tiles, normally by four persons. 136 tiles, on which characters or pictures are drawn, are placed face down on a table, and from among these tiles, 13 tiles (tiles on hand) are dealt to each player. Each player successively takes out one tile at a time from among the tiles that are placed face down, places the tile among the tiles that have been dealt to the player, and discards an unnecessary tile (tile to be discarded) with it being faced up on the table. One kyoku round of the game ends when one of the players completes a predefined combination with the dealt tiles. With each player, in a special state, such as when tiles that have been dealt to the player during the game form a specific combination, etc., the player can select between taking a tile from among those that are taken successively and taking a tile that has bee discarded by another player. The types of operations, by which a tile that has been discarded by another player is taken in based on a player's selection, include the "pon," "chii," and "kan."

Information, etc., concerning the four game players are also displayed on the display screen. By making such information visible to the game players, a game, with which the players can realistically sense the types of game players he/she is playing the game with, can be provided.

Also, button images of "chii," "pon," "kan," "riichi," "ron," "cancel," etc., are displayed at the bottom of the display screen, and when a button image is touched when these button images are displayed, the touch sensor 82 detects that the corresponding location that has been touched and supplies a predetermined touch signal to the CPU 66.

Also, a display setting button image is displayed above the cancel button image. When the display setting button image is touched, the touch sensor 82 detects that the corresponding location has been touched and supplies a predetermined touch signal to the CPU 66.

In this case, a display setting image described later is displayed in accordance with the operations of the game player.

Also, with the present mah-jong game, there are various information that is in accordance with the game results of a game player.

For example, jewels are taken according to the progress or results of this mah-jong game, and the information of a certain game player is displayed in the form of a birthstone, the number of jewels acquired, the number of emeralds, which are the birthstones, and the number of points as shown in Fig. 16.

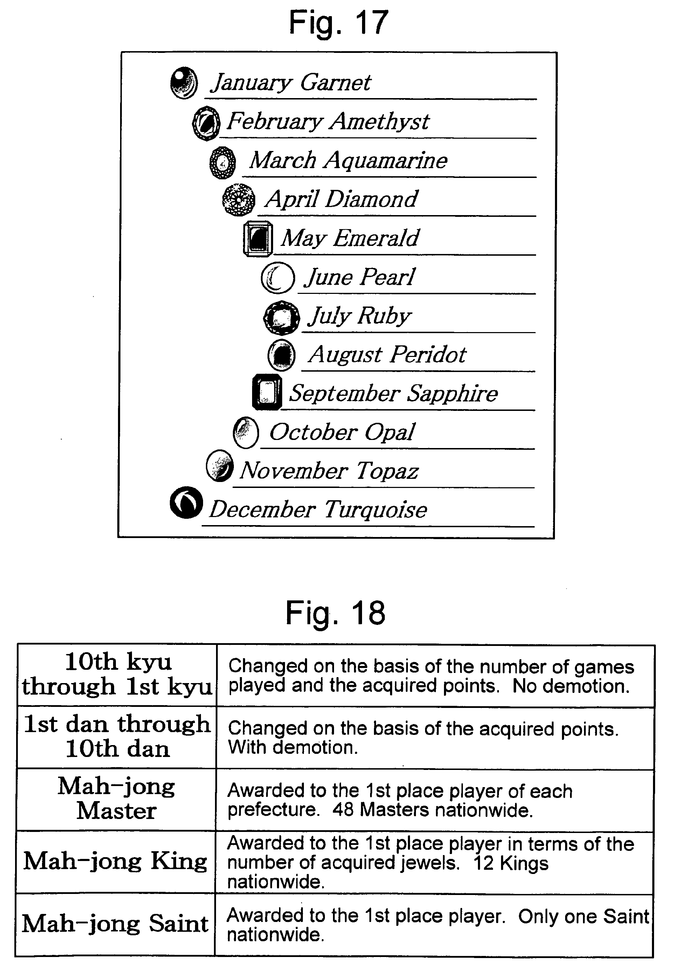

The birthstone is determined from each game player's own birth date as shown in Fig. 17, and for example, the emerald is birthstone for a game player born in May.

With the present invention's game (mah-jong) the number of acquired jewels is competed. That is, when all of the game players who forming a game player group are players of some degree, the first-place player acquires a jewel from the fourth-place (last-place) player in a game (match). Also, when a yakuman winning combination is completed, jewels are acquired from all players in the case of completion by "tsumo" or, in the case of completion by "ron," jewels are acquired from game players who provided tiles for completing the yakuman winning combination. Also, if a game player has lost all of his/her owned points (that is, a so-called blown-away player) due to the completion of a winning combination by the other game player, the game player who has completed the winning combination acquires jewels from the so-called blown-away game player. A birthstone is calculated as a triple point in the conversion to the number of points. When 67 jewels are acquired, and 5 of these are emeralds, which are birthstones, and 62 are jewels that are not birthstones, for example, the number of points is calculated as 5 x 3 + 62 x 1 = 77.

There are points awarded based on the ranking, which is the final result of the game itself, that is, based on the standard of first place = +6 points, second place = ±0 points, third place = -2 points, and fourth place = -4 points. There also are points awarded upon conversion of the birthstones into points as described above. 3 points are awarded for each of a player's own birthstone and 1 point is awarded for each of other jewels and these points are totaled with the above points based on the ranking. In accordance with this point count, a game player can acquire a "kyu" level, "dan" level, or title as shown in Fig. 18. For example, a "kyu" level, "dan" level, or title, such as the "8th dan" is displayed as shown in Fig. 16. The game player's level is made clear and the gaming motivation can be enhanced. The level is also made known to other game players, thereby providing a game which can be enjoyed further.

In this game, ranking is carried out respectively based on the number of acquired jewels, which are game credits, and based on the number of points acquired. And the game players of first place ranking of the respective cases are provided with titles.

Arrangements may be made so that even more values can be acquired when a special game described below is generated.

The abovementioned two types of game credits serve as basis for determining the ranking of a game, regardless of whether the game is a normal game or a special game.

By thus setting two types of game credits that can be acquired in a game, a game player's motivation to participate in a game can be enhanced and the enjoyment of the game itself can be heightened.

Depending on the point count, a ranking display may be carried out as shown in Fig. 20. The game level of a game player can be made clear and the gaming motivation can be enhanced by this display as well. The game level can also be made known to other game players, thereby providing a game that can be enjoyed further among the game players. Also a display setting of the ranking information may be carried out as described later.

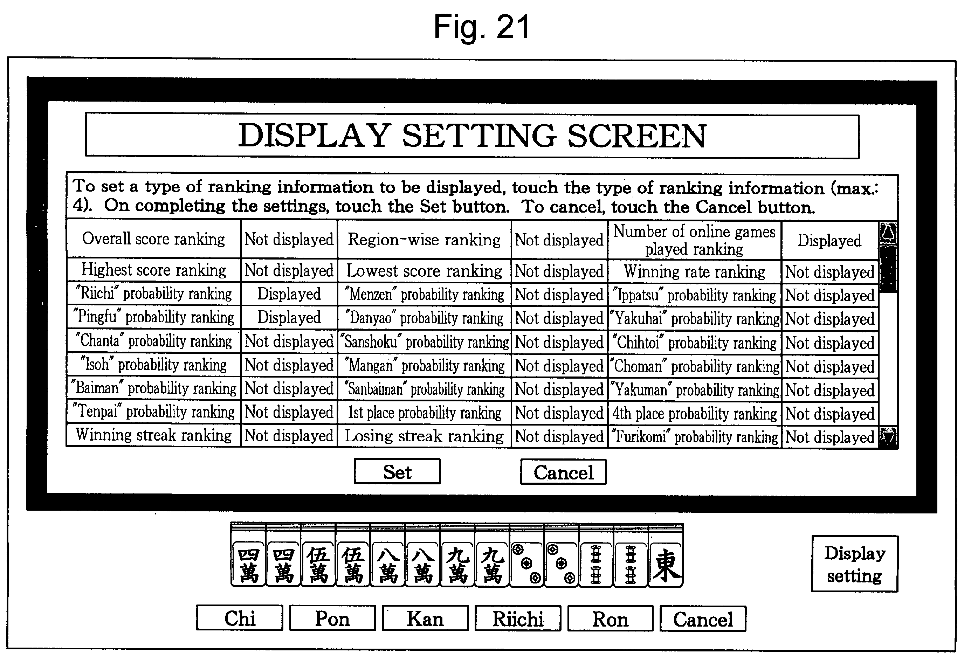

As mentioned above, a display setting screen shall now be described using Fig. 21 to Fig. 23.

First, when the display setting button image is touched, the display setting screen is displayed as shown in Fig. 21. In this display setting screen, the types of ranking information can be set.

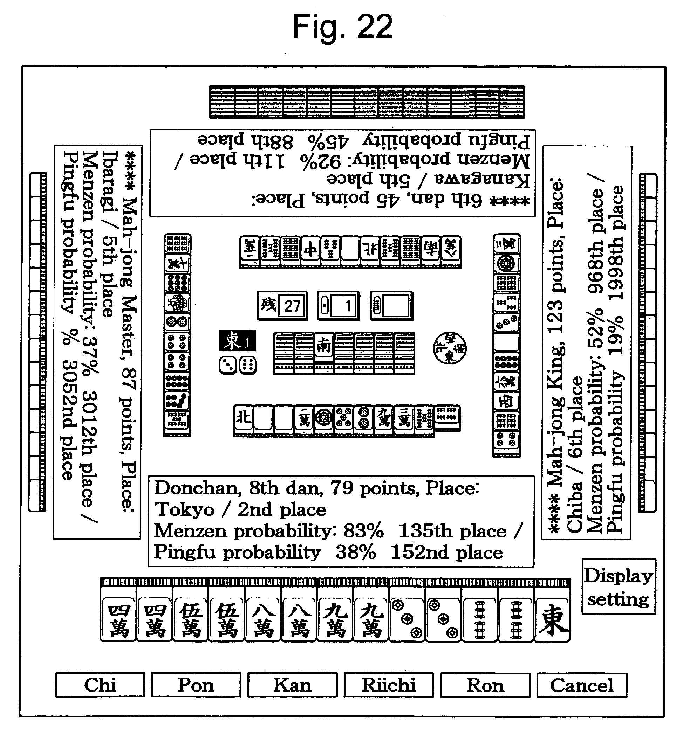

In regard to the timing at which the ranking information is to be displayed, the desired ranking information may be displayed to game players during a game as shown in Fig. 22. By doing so, one's own ranking and the opponents rankings can be recognized even during a game, thereby providing a game by which the gaming motivation can be enhanced.

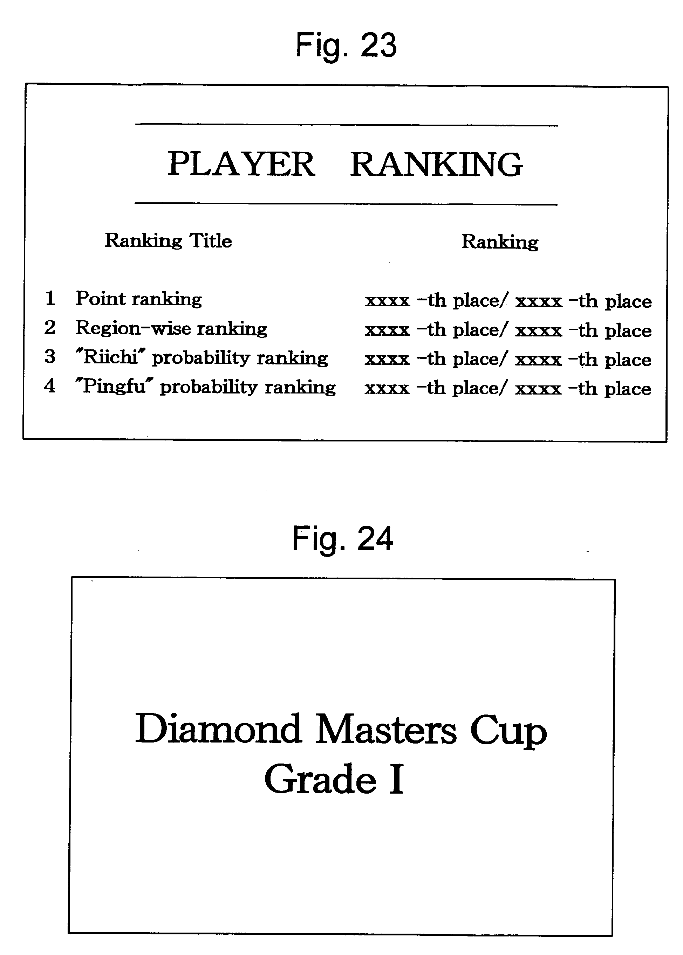

The ranking information may be displayed when a game is not being played. In particular, in the case where the ranking information is to be displayed at the end of a game, the ranking information is displayed as the results of the game as shown in Fig. 23, thereby enabling the outcome of the game to be recognized, thus enabling the provision of a game with which the gaming motivation can be enhanced.

Also, both the ranking information prior to the start of a game and those after the end of the game may be displayed as shown in Fig. 23.

By the above, not just one but a plurality of types of ranking information is displayed. Thus from a game player's standpoint, various ranking information can be displayed without being limited to a certain type of ranking information, and a game, with which the gaming motivation can be enhanced, can thus be provided.

Also, by the display of ranking information desired by the game players, a simple game can be provided, and a game, with which the gaming motivation of each of a plurality of game players can be enhanced in the game situation of each game player, can be provided.

Furthermore, the types of ranking information to be displayed can be set according to the operations of a game player, and by storage of the setting state, troublesome operations can be avoided. The lessening of a game player's motivation can thus be prevented.

Though the abovementioned "game" is a concept that includes games in general, competing games that are played with other game players are preferable, and among such games, those involving tactics are preferable, and, for example, a mah-jong game or a card game, etc., is more preferable.

As described later, the players of a mah-jong game can be determined based on the ranking information display setting.

Thus based on the ranking information desired by a game player, that is, based on the desired ranking information that are set to be displayed in the game player's viewpoint concerning the game, game players who have set the same ranking information can be determined as a game player group. And by collecting game players of similar viewpoint as a game player group, a game supporting the game player's interests can be provided and thus a new gaming property can be provided.

With the present invention, a new gaming property can be provided not just by the forming of a game player group from players who have set the same ranking information but also by the forming of a game player group from players who have set different ranking information. A newer gaming property can be provided by the forming of a game player group from game players who have set opposite types of ranking information.

Special game relating processes executed by the gaming server 21 of the present embodiment shall be described. These processes are executed by the CPU 22 of the gaming server 21 in linkage with other hardware in accordance with a computer program stored in the RAM 23, ROM 24, or storage unit 28. These processes realize the functions of the various means of the present invention.

### [Request for holding of a special game]

A game player can request the holding of a special game by operating the gaming terminal 41A, etc. When a certain game player inputs a request in a gaming terminal, the gaming server 21 performs a process of preparing for a special game. This special game holding request may be a request that does not restrict the type of the special game or a request for a particular type based on personal information desired by the game player him/herself. In the present embodiment, the holding of a special game based on personal information desired by the game player is requested. For example, the address of a certain game player is in the Tokyo Metropolitan District and this player wishes to invite other game players whose addresses are in the Tokyo Metropolitan District and hold an Intra-Tokyo Metropolitan District Match as a special game. In response to this request, the gaming server 21 selects game players who meet the conditions of the present special game from among the game players accessing the gaming system 10 presently. And the gaming server 21 makes call for participation in the special game in order to hold the special game, and then holds the special game.

That is, when a special game holding request is input into a gaming terminal by a game player and the gaming terminal transmits a special game holding request signal to the gaming server, the gaming server 21 receives this signal, determines the type of special game that is desired by the game player, and transmits to the gaming system 10 a signal for selecting game players who meet the conditions of participation in the present special game from among the game players having access by gaming terminals.

### [Game player selection process]

Based on the type of special game based on the special game holding request signal received from the gaming terminal, the gaming server 21 performs the process of selecting game players who meet the conditions of participation in the present special game from among the game players having access to the gaming system 10.

Since guidance information of the special game participation are thus transmitted only to game players who meet the conditions of specific personal information, and since the guidance information are thus not notified to game players who do not meet the conditions but are notified only to game players who meet conditions, the notification can be carried out efficiently.

### [Transmission process of special game participation offer and guidance]

Based on the type of special game that has been determined based on the special game holding request signal received from the gaming terminal, the gaming server 21 transmits a special game participation offer and guidance signal to gaming terminals operated by game players who have been selected from among the game players presently accessing the gaming system 10 as meeting the participation conditions of the present special game.

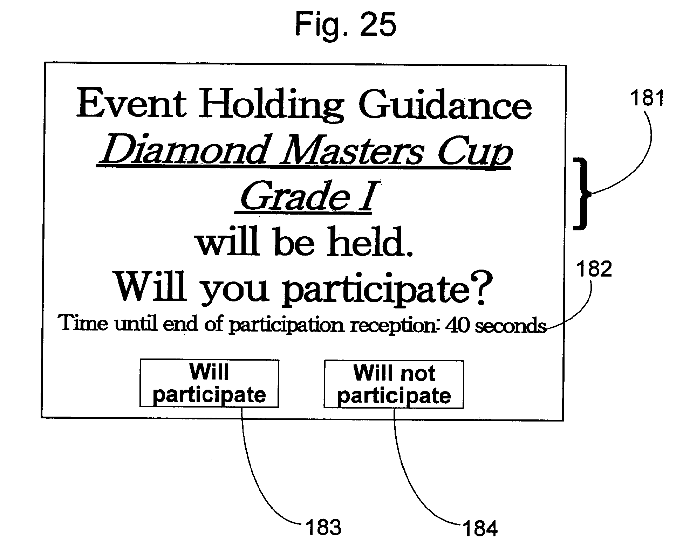

Fig. 25 shows a display image of special game participation offer and guidance information that is displayed on the display devices 32 of the gaming terminals operated by the abovementioned game players when the abovementioned special game participation offer and guidance signal is transmitted to the abovementioned gaming terminals. On this display screen are displayed a display 181 of the type of special game, the holding of which was requested by a certain game player, a display 182 notifying the time remaining to a predetermined time until which participation in response to the present guidance is accepted, a touch part 183, which is linked to a touch sensor that is to be touched when a game player accepts the present guidance and expresses that he/she will participate, and a touch part 184, which is linked to a touch sensor that is to be touched by the game player to express that he/she will not participate in response to the present guidance.

By the above display, the game player feels that he/she was selected to participate in a special game and participates in the special game while feeling a special bond with the game player who requested the holding of the special game. Also, since participation or non-participation can be decided based on one's own will, the game player feels that he/she himself/herself has the right to determine which game to participate in and the enjoyment of game participation can thus be enhanced.

### [Special game participation information reception process]

Based on the response to the transmission of special game participation offer and guidance signal, the gaming server 21 transmits the special game participation offer and guidance notification signal to gaming terminals operated by game players, who meet the abovementioned special game participation conditions and have been selected from among the game players presently accessing the gaming system 10 by the above-described game player selection process. When, the game players express that they will participate in the special game and special game participation information signals are transmitted from the gaming terminals, the gaming server 21 receives the signals and, performs a process of transmitting a signal instructing the game management process of the gaming server 21 to execute the special game.

### [Game management process]

When there are a plurality of game players, who perform an entry process (load a coin into and undergo a game player authentication process) on the gaming terminals 41A, 41 B, 41C, and 41 D of the gaming terminal groups 31A and 31 B to play a game at a certain time without requesting to hold a special game, the gaming server 21 groups the plurality of game players into units of the number of players necessary for the game, for example, into units of four players in the case of mah-jong and thereby forms game player groups. That is, game player groups, which are groups of game players who will play a game round of the same game, are formed, and which game players are playing which game is managed thoroughly from the time of the start of the game to the time of the end of the game.

Also, when a certain game player performs an entry process (loads a coin into and undergoes the game player authentication process) on any of the gaming terminals 41A, 41 B, 41C, and 41 D of the gaming terminal groups 31A and 31 B and requests the holding of a special game at a certain time, and the other game players answer the request and are about to participate in the special game within a predetermined time difference, the plurality of game players are grouped into units of the number of players necessary for the game, for example, into units of four players each in the case of mah-jong to thereby form game player groups and the game is managed in these units. That is, game player groups are formed with the game players playing the same special game, and the game players and special games are managed thoroughly from the start time of the special game to the end time.

### [Tile dealing management process]

Under the control of the CPU 22, the gaming server 21 manages predetermined mah-jong operations and states, such as "haipai," "tsumo," "tapai," "sutehai," etc. That is, in a specific game, which tiles are to be subject to "haipai" (distribution) to the game players and which tiles are to be subject to "tsumo" are determined and the "sutehai" (tile discarding) processes are managed.

### [Game player substitution function process]

Regardless of a normal game or a special game, when the gaming server 21 cannot form a group of game players playing the same game in the above-described game management process, the gaming server 21 functions as a virtual game player and participates in the game. As a virtual game player in a specific game, the gaming server 21 performs process corresponding to "tsumo (tile drawing)," "tapai (tile discarding)," "chi (tile drawing)," "pon (tile drawing)," "kan (tile drawing)," "riichi (ready declaration)," and other predetermined gaming operations of mah-jong, like a normal game player performs, under the control of the CPU 22.

### [Game player authentication process]

When a game player attempts to participate in a game, the gaming server 21 authenticates whether or not the game player has already registered his/her personal information in the gaming server 21. This authentication is performed by means of a rewritable magnetic card. The personal information (game player ID) on the magnetic card is read by the card reader on the gaming terminal 41A, 41 B, 41C, or 41 D, and the game player inputs a password form the touch panel. The game player is specified with a combination of personal information and a password. If the game player has not registered his/her personal information, registration is performed anew and a new magnetic card is issued.

Though a magnetic card is used in the present embodiment, the present invention is not limited thereto An IC-chip integrated card, etc., or any other medium in which personal information can be recorded may be used instead.

### [Special game generation process]

In cases besides holding a special game due to a special game holding request by a certain game player, the gaming server 21 determines, on the basis of the membership attributes of the four game players grouped in the above-described game management process, whether or not to generate a special game. In the case of the generation of a special game, an applicable special game is determined and the determination result is stored for the above-described game management process. Based on the result, the game is started and the progress of the game is managed in the above-described game management process. That is, a search using the game player IDs as keys is performed on the personal information table of Fig. 5 and Fig. 6, the personal ranking table of Fig. 7, and the personal yakuman winning combination record table of Fig. 8, and the attributes, personal rankings, and yakuman winning combination records are read into the RAM 15, a special game is generated upon determination the sameness, mutual relevance, or difference of the information, and the special game is executed in accordance with the game management process.

In the case where a special game is held by request of a game player, the above-described special game generation process is not carried out. When in the above-described special game participation offer and guidance information reception process, the signals indicating the participation of game players in the special game are received, information for the holding of the special game are provided directly from the special game participation offer and guidance information reception process to the above-described game management process and the special game is held.

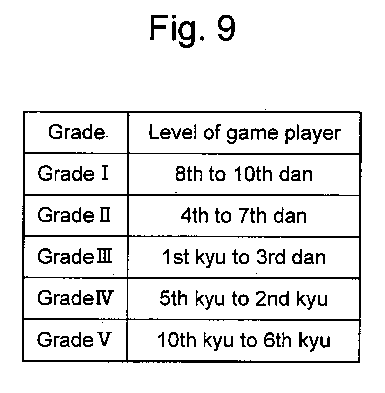

In the present embodiment, the personal information table of Fig. 5 and Fig. 6 and the personal ranking table of Fig. 7 are referenced to find common attributes among the four players playing the game, and a game is arranged as a special game by providing the special game with a title based on the common attributes. Furthermore, the special game grade collation table of Fig. 9 is referenced and the grade of the special game is determined based on the levels of the four game players who are to play the game. The grade of the special game may be determined using any method from the levels of the four game players. For example, The grade may be the lowest level, average level, or highest level, etc., among the four game players.

For example, in a case where the birthdays of the four game players grouped by the above-described game management process, are in April, a special game, called the "Diamond Masters Cup" based on the name of the birthstone of April, is held. Also, the grade of the special game is determined based on the data of the lowest level among the levels of the four game players who are to play the game. For example, if the lowest level of the four game players is the 8th dan, the special game is titled the "Diamond Masters Cup Grade I" based on the special game grade collation table (see Fig. 24).

On the other hand, in the case where the addresses of the four game players, grouped in the above-described game management process of the gaming server 21, are all in the Tokyo Metropolitan District, a special game titled the "Tokyo Metropolitan District Masters Cup Grade II" may be generated in consideration of the levels of the four game players.

By the above, the enjoyment of playing a special game with total strangers is added, thereby enabling the provision of a game that can heighten a player's anticipation.

Also, since the factors for generating a special game are the personal information of each of the plurality of game players, a game can be provided wherein a bond in the form of personal information can be felt via the network 51.

A special game may also be generated based on the last names, first names, age group, gender, blood type, astrological sign, or any of other various game player attributes that are in common among the four game players.

A special game may be generated for a combination in which the attributes are completely unmatched and different attributes are represented respectively. For example, a special game may be generated with the blood types of the four game players being the "A" type, "B" type, "AB" type, and "O" type.

The factors for a special game are the respectively different personal attributes of the plurality of game players. A game can thus be provided so that the players are aware of representing specific attribute on the network 51, and gaming motivation can be enhanced.

Though in regard to the requirements of the above-described generation of a special game, a case where four game players are required is assumed, even in the case where a virtual game player, who functions through the game player substitution function process performed by the gaming server 21 under the control of the CPU 22, participates, attributes in common to the other actual players may be sought to generate the special game.

When a game is determined as a special game described above in the special game generation process of the gaming server 21, the information of the generated special game are stored for the game management process. In the game management process, based on this information, a signal notifying that a game is based on the special game is transmitted to the applicable gaming terminals for playing the game.

### [Connection address management process]

Under the control of the CPU 22, the gaming server 21 manages the connection address information of the gaming terminal groups 31A, 31B, ...or the respective gaming terminals 41B, 41C, 41D, ... that are connected to the gaming system 10. The connection address information is stored in the storage unit 28. In the connection address management process, a renewal of the connection address information is performed and the personal information is associated with the terminal when a game player participates.

### [Personal record renewal process]

The gaming server 21 performs processes of determination of the completed winning combinations and score management of the respective game players, and at the end of game, performs a process of renewing the information in the personal ranking table and the personal yakuman winning combination record table. Specifically, when a certain game player has completed a yakuman winning combination, the type of the yakuman winning combination is determined and the information in the personal yakuman winning combination record table are renewed At the end of a game, a process is performed to make the number of jewels acquired and the number of jewels lost in a game, the points calculated from the jewels, and the points acquired or the points lost based on the final ranking in the game be reflected as results in the points in the personal ranking table.

In the present embodiment, a birthstone is calculated as 3 points and other jewels are calculated as 1 point each in regard to jewels. The personal ranking points are renewed in regard to the final rankings of the players in a game. The renewal is based on the standard of first place = +6 points, second place = ± 0 points, third place = -2 points, and fourth place = -4 points.

Furthermore, based on the point counts determined from the above-described processes, the national rankings of the game players and the rankings of the game players in the respective prefectures are determined, and the first-place game player in the national ranking is awarded the title of "Mah-jong Saint," the first-place game player in any of the prefectural rankings is awarded the title of "Mah-jong Master," and the acquired title item of the personal ranking is renewed accordingly. For example, the first-place game player in terms of the point count in the Tokyo Metropolitan District is awarded the title of "Tokyo Metropolitan District Mah-jong Master."

The rankings of the game players are renewed in accordance with the points acquired in the above-described processes (see Fig. 20).

Also, based on the numbers of jewels determined from the above-described processes, the first-place game player in terms of the number of jewels acquired is determined for each of the 12 birthstones and is awarded the title of "Mah-jong King" and the acquired title item of the personal ranking is renewed accordingly. For example, the first-place game player in terms of the number of diamonds acquired is awarded the title of "Diamond Mah-jong King" (see Fig. 18).

Also, at the end of a game, the game player who has completed a yakuman winning combination the highest number of times is searched for each type of yakuman winning combination from the information in the personal yakuman winning combination record table, and each such game player is awarded a title. The yakuman winning combination ranking item of the personal ranking is renewed accordingly.

Furthermore, after renewing the personal ranking table and the personal yakuman winning combination record table as described above, the gaming server 21 performs the respective display of records on the display devices 32 of the respective gaming terminals.

Specifically, there are the following three types of record displays.

In the first type of display (not illustrated), the personal ranking based on the acquired point count is displayed. Included among this display type are the national personal ranking display, wherein the nationwide ranking of a game player is displayed, the "prefectural personal ranking" display, wherein the ranking of a game player within the prefecture to which the game player belongs is displayed, and the "acquired jewel ranking" display, wherein the ranking in terms of the number of acquired jewels is displayed according to each type of jewel, which is a game credit.

The second type is the "JAPAN" ranking display, wherein the point counts of game players are totaled according to prefecture, the rankings of the prefectures to which the game players belong are displayed, and the first-place game players, that is, the "Mah-jong Masters" of those prefectures are displayed (see Fig. 20).

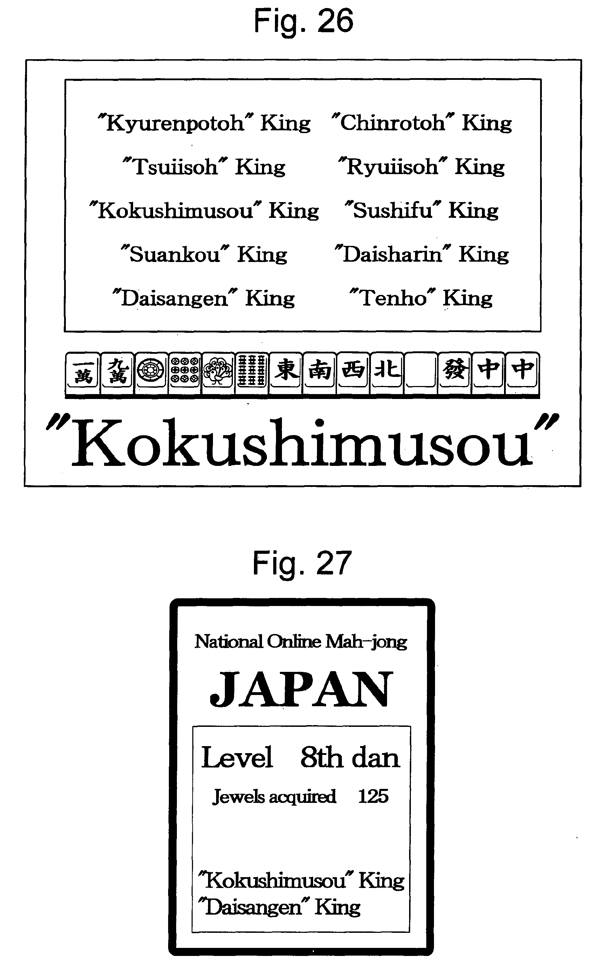

The third type is the "yakuman ranking" display, with which the ranking in terms of the number of times of completion is displayed for each type of yakuman winning combination, and for each yakuman winning combination, the person who has completed that yakuman winning combination the largest number of times in the nation is awarded a title having the name of that yakuman wining combination. For example, the person who has completed the "kokushimusou" winning combination the largest number of times is awarded the title of "Kokushimusou King" (see Fig. 26).

The abovementioned rankings may be summarized for each player as shown for example in Fig. 16.

With regard to the abovementioned rankings, information read in from the rewritable magnetic card of Fig. 27 at the start of a game is displayed constantly on the gaming screen during the game (see Fig. 19).

By carrying out such ranking and title awarding processes on the game result of a game player, the game player's motivation to participate in a game is enhanced. The enjoyment of the game itself is also increased and a game player's will to compete can also be aroused.

The above-described processes are executed regardless of whether the game results are those of a normal game or a special game.

In particular, when a game is a special game that was generated by the above-described special game generation process, the winner of the game is awarded a title that is in accordance with that special game (that is, the title "Diamond Master Grade I" or "Tokyo Master Grade II" in the above-described examples).

Also, in the case of a special game held by a holding request made by a certain game player, the game winner is awarded a title that is in accordance with that special game. Specifically, when by a certain game player, a special game to be played by game players whose addresses are in the Tokyo Metropolitan District is held and the rankings of all of the game players are of the 8th dan level or higher, the title of that special game will be the "Tokyo Metropolitan District Masters Cup Grade I." The winner is awarded the title of "Tokyo Metropolitan District Master Grade I."

Though with the present embodiment, the title that is awarded to a game player in a special game is finalized in each special game and is not subject to acquisition by other players in special games that are held after the particular special game, the present invention is not limited thereto. That is, a title that has been awarded to a game player may be a subject of acquisition in other special games.

### [Operation of the gaming system]

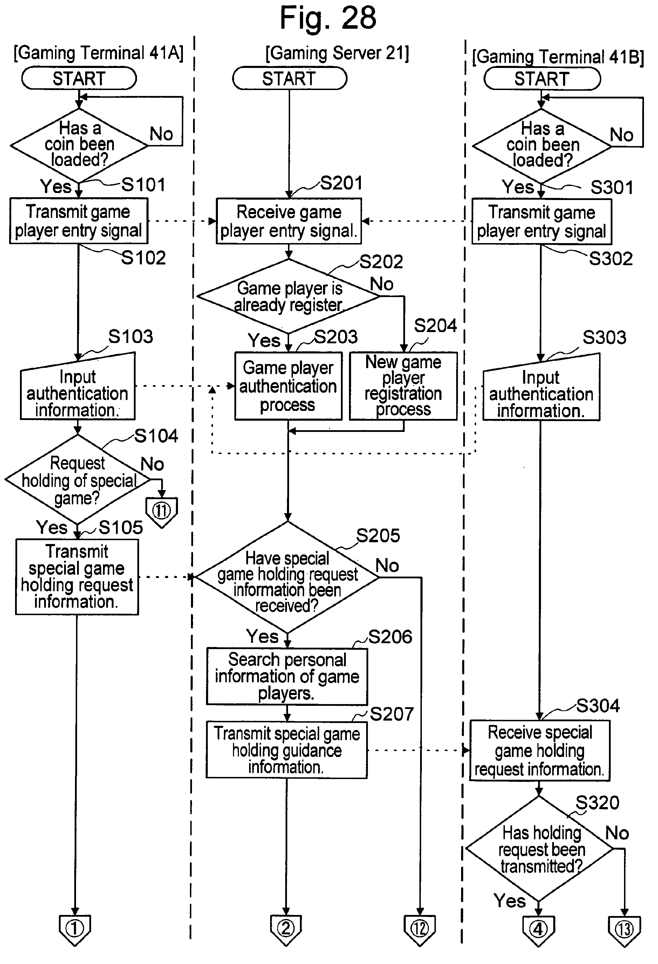

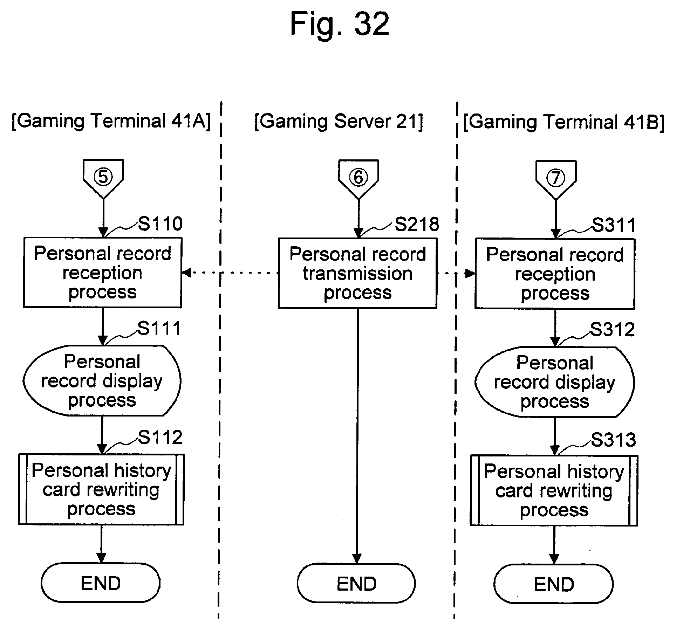

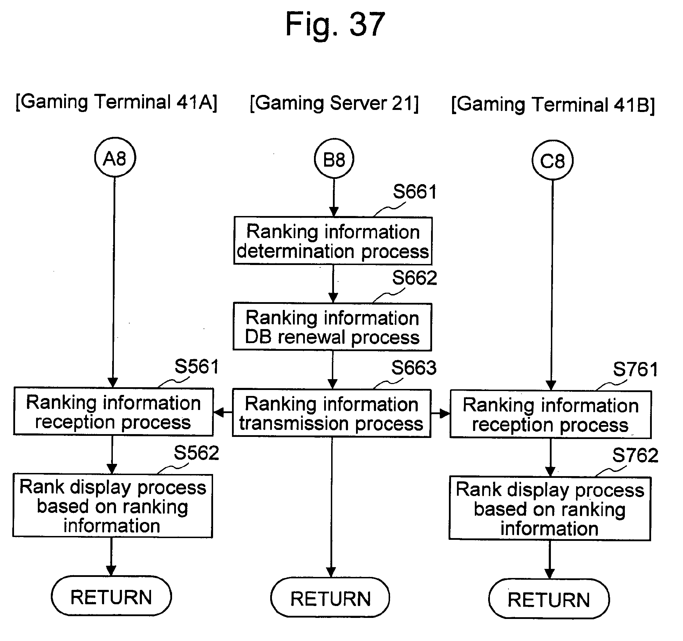

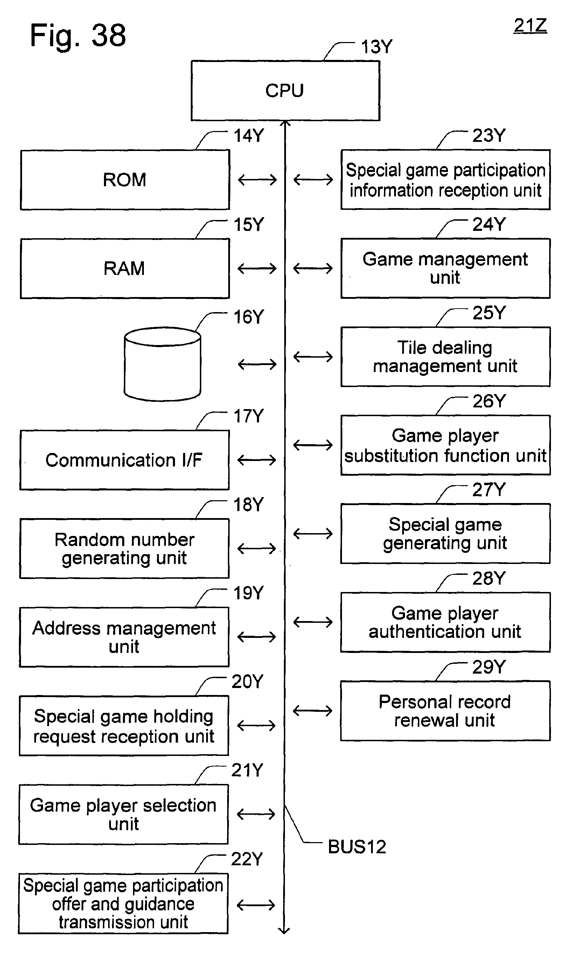

Fig. 28 to Fig. 38 show the flows of programs for controlling the gaming system 10. These programs are executed at the above-described gaming server 21, terminal group control circuit 91, terminal control circuit 61, and various other circuits.

In the description referring these figures, the gaming terminal 41A shall represent a gaming terminal by which a game player requests for the holding of a special game, and the gaming terminal 41 B shall represent the terminal group of game players who participate in the special game in response to the special game holding request.

When a coin is loaded into the coin inlet of each of the gaming terminals 41A and 41 B and the coin detection sensor 68 of each detects the loading of the coin (step S101, step S301), the CPU 66 of each of the gaming terminals 41A and 41 B transmits a game player entry signal to the gaming server 21 (step S102, step S302). At the gaming server 21, when the CPU 22 detects the receiving of a game player entry signal via the communication I/F 26 (step S201), the CPU 22 performs, as the game player authentication process, the referencing of the personal information table of the database installed in the hard disk 16 and the determination of whether or not information on the corresponding game player has already been registered in the personal information table (step S202). If the information has already been registered (determined as Yes in step S202), the game player authentication process is performed (step S203). If the information has not been registered (determined as No in step S202), a new game player registration process is performed (step S204). This new game player registration process is a general registration process wherein an offer for membership is made from any of the gaming terminals 41A, 41B, ... and via the network 51, a game player ID and a password are provided to a registrant, and personal membership information is collected for the items, shown as examples, in the diagram of the personal information table shown in Fig. 5 and Fig. 6.

If the registrations had been carried out already, the game players insert their gaming cards, which are rewritable magnetic cards, in the respective card insertion openings 34 of the gaming terminals 41A and 41 B, and a membership authentication process is carried out by the card reader/writers 83 reading the information recorded in the membership cards. The CPU 66 of each of the gaming terminals 41A and 41 B transmits the information read from the membership card and the password input by the game player from the touch sensor 82 to the gaming server 21 (step S103, step S203), and at the gaming server 21, the CPU 22 performs the membership authentication process as the game player authentication process (step S203).

When the game player on the gaming terminal 41A is authenticated by the above-described process as being a genuine member and then touches the touch part 183 of the display device 32 to request the holding of a special game (determined as Yes in step S104), the touch sensor 82 of the gaming terminal 41A detects the touch, and the CPU 66 that has received the detection signal transmits special game holding request information to the gaming server 21 via a communication interface circuit 63 (step S105). As the special game holding request reception process, the CPU 22 of the gaming server 21 receives the special game holding request information that was transmitted from the gaming terminal 41A and determines whether or not the information has been received. If the information has been received (determined as Yes in step S205), the process is advanced to the step S206. An example of the process of the special game holding request reception means is realized by step S205.

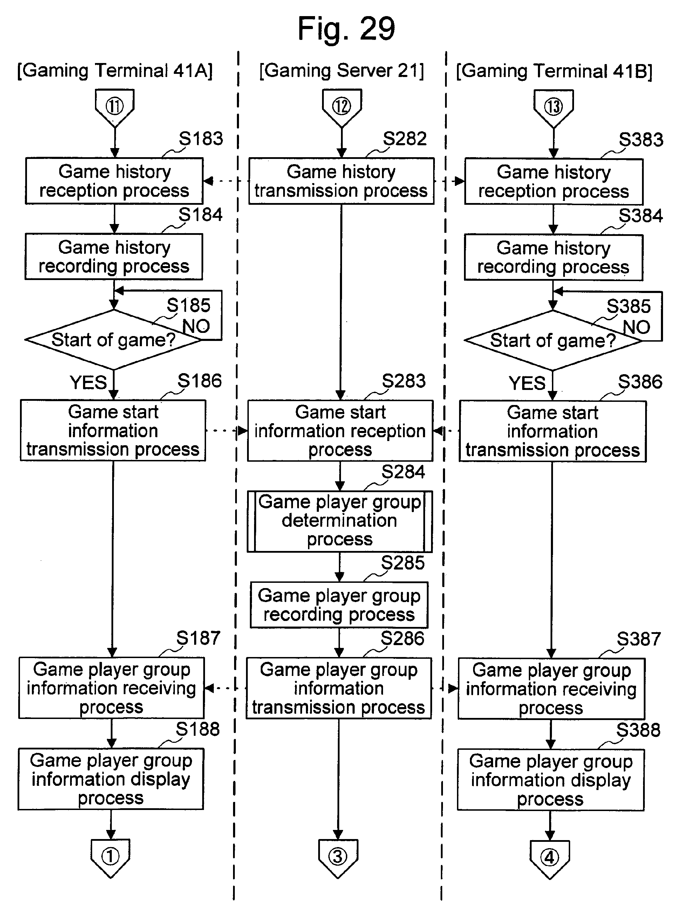

If the game player on the gaming terminal 41A does not request the holding of a special game (determined as No in step S104), step S105 is not executed and the process of step S183 (Fig. 29) is executed. Since the gaming server 21 thus does not receive the special game holding request information from the gaming terminal 41A (determined as No in step S205), the process is advanced to the step S282 (Fig. 29).

In step S206, the CPU 22 of the gaming server 21 performs a search for the personal information necessary for holding the special game, which was desired by the certain game player and the request for which has been transmitted from the gaming terminal 41A. Specifically, the CPU 22 at the gaming server 21 references the personal information table (see Fig. 5 and Fig. 6), the personal ranking table (see Fig. 6), and the personal yakuman winning combination record table (see Fig. 7) in the database installed in the hard disk 16, and, based on the personal information of game players or gaming records of game players that are stored in the respective tables, performs a search of game player IDs of game players who meet the qualifications to participate in the special game desired by the abovementioned game player who desired the holding of the special game (step S206). If game players who meet the qualifications are accessing the gaming system 10, the CPU 22 performs, as the special game guidance process, the transmission of special game holding guidance information to those game players (step S207). By the process of step S207, an example of the function of the special game holding guidance means is realized.

As the special game generation process, the CPU 22 references the personal information table (see Fig. 5 and Fig. 6), the personal ranking table (see Fig. 7), and the personal yakuman winning combination record table (see Fig. 8) in the database installed in the hard disk 16, reads all of the attributes and records of the game players who are to participate in the present game into the RAM 15. And by the special game generation process, the CPU 22 determines the special game to be generated based on the information that was read and the special game grade collation table of Fig. 9.

For example, if April is the birth month of all of the game players belonging to a game group and all of the game players are of a level of the 8th dan or higher, the special game of "Diamond Masters Cup Grade I" is generated as the special game. A game player who has won first place as the final result in special game was generated is awarded the title of "Diamond Master."

Also, if the blood type of the game players belonging to a game group is type "A" and all of the game players are of a level of the 6th dan or higher, the special game of "Blood Type A Masters Cup Grade II" is generated as the special game.

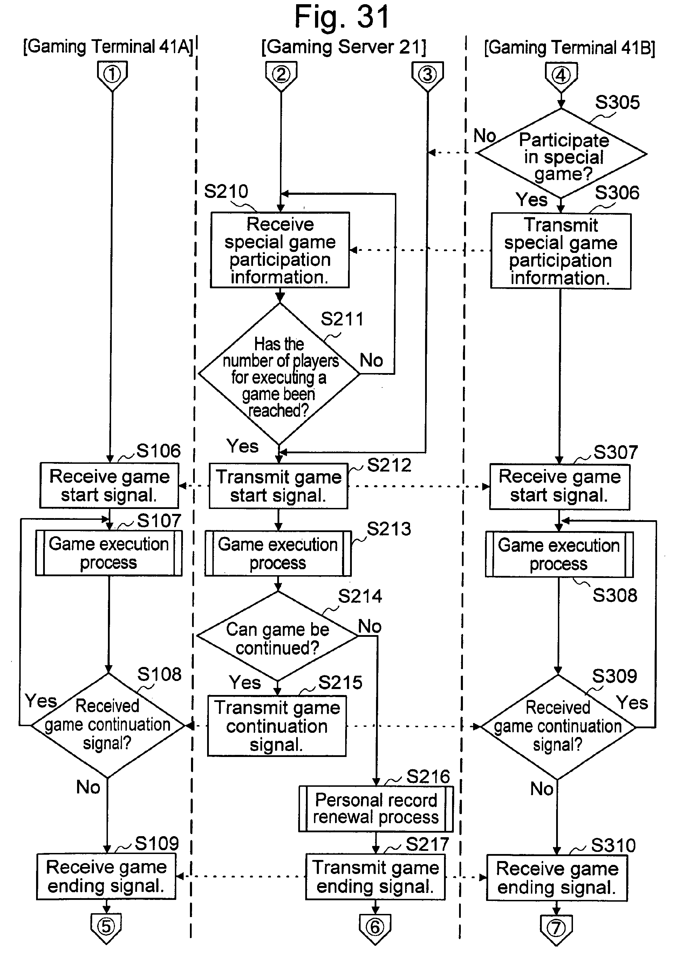

If each of the game players in a group is a "Mah-jong King" of any of the prefectures, the special game of "Mahjong-King Match" is generated as the special game. Thereafter, the CPU 22 enters the process of S210 (Fig. 31).

At the gaming terminal 41 B, the CPU 66 detects the receiving of special holding request information via the communication interface circuit 63 (step S304).

The CPU 66 determines whether or not a holding request has been received (step S320) and if it is determined as Yes, that is, special holding request information has been received, then the process is advanced to the step S305 (Fig. 31), while if determined as No, that is, if it is determined that special holding request information has not been received, the process is advanced to the step S320 (Fig. 29).

As shown in Fig. 29, at the gaming server 21, a game history transmission process is executed (step S282). In this process, the CPU 22 reads the game history information based on the game player authentication information, which was received from the gaming terminals 41A and 41 B in step S203, and the game history file of the game history database stored in the storage unit 28, and transmits the information to the terminal control circuit 61A via the communication I/F 26 and the network 51. On completion of this step, the process is advanced to the step S283.

At the gaming terminal 41A, a game history reception process is executed (step S183). In this process, the CPU 66 receives the game history information, which was transmitted via the communication I/F 74 from the gaming server 21 in the process of step S282, and records the information in the RAM 70. On completion of this step, the process is advanced to the step S184.

Next, at the gaming terminal 41A, a game history recording process is executed (step S184). In this process, the CPU 66 reads the game history information, which was recorded in the RAM 70 in step S103, and records the information in the EEPROM 65. On completion of this step, the process is advanced to the step S185.

Whether or not a game has started is determined at the gaming terminal 41A (step S185). In this process, the CPU 66 advances the procedure to the step S186 in accordance with the operations of the game player or in accordance with the automatic starting of a game, and generates and transmits game starting information, which indicates the start of a game, to the gaming server 21 (step S186). On completion of this step, the process is advanced to the step S187.

Meanwhile, a game start information reception process is executed at the gaming server 21 (step S283). In this process, the CPU 22 receives the game start information transmitted from the gaming terminals 41A and 41 B in the process of step S106, and records the information in the RAM 23.

A game player group determination process is then executed at the gaming server 21 (step S284). In this process, the CPU 22 forms a game player group comprising four game players and records this in the storage unit 28. Details of this process, which is an example of the function of the game player group determining means shall be described later.

Also, the CPU 22 determines the order of the game players in the game player group that has determined in the process of step S284 and records information indicating the order of the game players in the RAM 23 (step S285). The CPU 22 then transmits the information indicating the game player group and the information indicating the order of the game players to the gaming terminal 41A via the network, etc., (step S286). The four game players who make up the present game player group may all be actual players or may include virtual game players under computer control. On completion of this step, the process is advanced to the step S212 (Fig. 31).

Meanwhile, at the gaming terminal 41A, a game player group reception process is executed (step S187). In this process, the CPU 66 receives, via the communication I/F 74, the information indicating the game player group and the information indicating the game group that were transmitted by the process of step S286, and records the information in the RAM 70. Then based on the information indicating the game player group and the information indicating the order of the game players in the RAM 70, the CPU 66 displays the ranking information, etc., of the respective players on the display device 32 (step S188). On completion of this step, the process is advanced to the step S106.

The same processes as those of the gaming terminal 41A are also performed at the gaming terminal 41 B. That is, the steps S383 to S388 of the gaming terminal 41 B are the same as the steps S183 to S188 and description thereof shall thus be omitted.

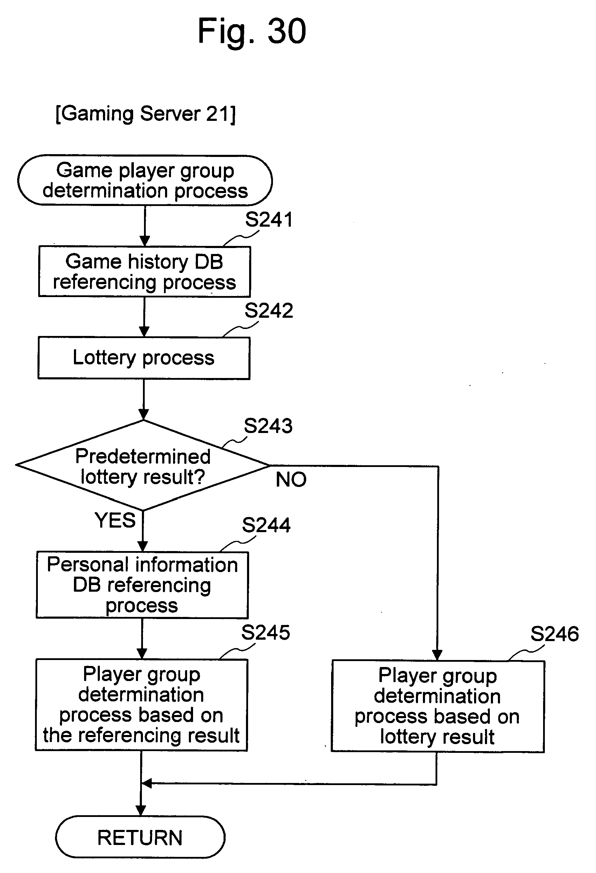

Fig. 30 shows the flow of the game player group determination process subroutine, which is called in step S284 (Fig. 29) at the gaming server 21.

First, the CPU 22 executes a process of referencing the game history data that are stored in the storage unit 28 (step S241). In this process, the CPU 22 reads the game enabling flag in the personal information table (Fig. 5) in the game history database, and references game players for whom this flag is in the standby state (specifically, "FFFE," as mentioned above). On completion of this step, the process is advanced to the step S242.

Next, a lottery process is executed at the gaming server 21 (step S242). In this process, the CPU 22 generates, in accordance with a program, a random number for determining a game player who is to be included in the game player group and records this random number in the RAM 23. On completion of this step, the process is advanced to the step S243.

Next, the CPU 22 of the gaming server 21 determines whether or not the lottery result is a prescribed lottery result (step S243). In this process, the CPU 22 determines whether or not the random number that was stored in the RAM 23 in the process of step S242 is within a prescribed range. If the CPU 22 determines that the random number is within the prescribed range, the process is advanced to the step S244, while it is determined that the random number is not within the prescribed range, the process is advanced to the step S246.

If the random number is determined to be within the prescribed range by the determination of step S243, a personal information database referencing process is executed (step S244). In this process, the CPU 22 references the desired displayed ranking setting information in the personal information database stored in the storage unit 28. On completion of this step, the process is advanced to the step S245.

Then at the gaming server 21, the game player group determination process is executed based on the reference results (step S245). In this process, the CPU 22 searches for game players of the same desired displayed ranking setting information as those referenced in the process of step S244 and, in order to make these game players play a mah-jong match as a game player group, renews the game enabling flags in the personal information database.

Here, game players of the "same" desired displayed ranking setting information shall not refer to game players for which all of the desired displayed ranking setting information is the same but to game players for which a part of the desired displayed ranking setting information is the same.

Game players, who have set the same ranking information, can thus be determined to form a game player group based on the ranking information desired by the game players, in consideration of the viewpoints in regard to a game, and based on the desired ranking information that is set to be displayed. And by forming a game player group with game players having similar viewpoints in regard to a game, a game that is in accordance with the interests of the respective game players can be provided and thus a new gaming property can be provided.

Though in the present embodiment, game players who are not the same in all of the desired displayed ranking setting information but is the same in a part of the desired displayed ranking setting information is determined, the present invention is not limited thereto. Game players who are the same in all of the desired displayed ranking setting information may be selected for the game player group instead. In this case, game players having more similar viewpoints in regard to a game can be brought together as a game group in comparison to the present embodiment, and a new gaming property can thus be provided.

Furthermore, a new gaming property can be provided not only by selecting game players who have set the same ranking information as a game player group, but also by selecting game players who have set different ranking information as a game player group, and furthermore an even newer gaming property can be provided by selecting as a game player group, game players who have set extreme opposite types of ranking information from among game players who have set different ranking information. On completion of above process, the present subroutine is ended.

Meanwhile, if in the determination of step S243, it is determined that the random number is not within the prescribed range, a process of determining the game player group based on the lottery result is executed (step S246). In this process, the CPU 22 renews the game enabling flags in the personal information database so as to make game players play a mah-jong game match as a game player group based on the random number recorded in the RAM 23 in the process of step S242. Game players included in a game player group can thus be determined randomly. When this process is ended, the present subroutine is ended.

Fig. 31 shows the flow following that of Fig. 29.

If the game player on the gaming terminal 41 B is to participate in the special game in response to the present special holding guidance (determined as Yes in step S305), the touch part 183 of Fig. 25 is touched by the game player on the gaming terminal 41 B and special game participation information, by which participation in the special game is declared, are transmitted by the CPU 66 from the gaming terminal 41 B to the gaming server 21 via the communication interface circuit 63 (step S306).

At the gaming server 21, the CPU 22 receives the special game participation information via the communication I/F 26 (step S210), and this reception process is continued as long as the number of game players that enables the execution of a game (four players in the case of a mah-jong game) is not reached (determined as No in step S211). When the number of times the special game participation information is received reaches the number of players that enables the execution of a game (determined as Yes in step S211), the CPU 22 transmits a game start signal for starting the special game to the gaming terminals 41A and 41 B via the communication I/F 26 (step S212).

Though the present embodiment is arranged so that the receiving of the special game participation information is accepted until the number of players that enables the execution of a game is reached as described above and so that the special game is started when the number of times the special game participation information is received reaches the number of players that enables the execution of a game, the present invention is not limited thereto. Arrangements may be made so that even if the number of players that enables the execution of a game is not reached, the CPU 22 of the gaming server 21 will substitutingly play a game by the game player substitution function process and thereby make a virtual game player that meets the qualifications for participation in the special game participate.

The gaming server 21 transmits the game start signal to the gaming terminals 41A and 41 B via the communication I/F 26 (step S212) and then the procedure is advanced to the S213.

At the gaming terminal 41A, after the CPU 66 receives the game start signal from the gaming server 21 via the communication interface circuit 63 (step S106), it advances the procedure to the game execution process (step S107). The same processes as those of gaming terminal 41A are also carried out at the gaming terminal 41 B (steps S307 and S308). A game (mah-jong) is thus executed while the gaming server 21 communicates with the gaming terminals 41A and 41 B. The details of steps S107, S213, and S308 shall be described later.

Referring now to Fig. 19, the parts indicated by the symbol 77 are touch parts, which are displayed on the display devices 32 of gaming terminals 41A and 41 B to receive the game player's instructions for performing predetermined operations of mah-jong ("Chi(tile drawing)," "Pon(tile drawing)," "Kan(tile drawing)," "Riichi(ready declaration)," and "Ron," and "Cancel," by which the cancellation of an aforementioned operation is indicated) and detect the operation instruction signal in linkage with the touch sensor 82.

After step S213, the CPU 22 of the gaming server 21 determines, in step S214, whether or not the game can be continued following the predetermined process corresponding to the game execution signal. If continuation is possible (determined as Yes in step S214), the CPU 22 of the gaming server 21 transmits a game continuation signal to the gaming terminals 41A and 41 B via the communication I/F 26 (step S215).

When this signal is received via the communication interface circuits 63, the CPUs 66 of the gaming terminals 41A and 41 B (determined as Yes in step S108 and determined as Yes in step S309) continue with the game execution process (step S107, step S308). Meanwhile, if continuation is not possible (determined as No in step S214), since this indicates the end of a game, the CPU 22 performs the personal record renewal process (step S216). That is, the personal ranking table (see Fig. 7) and the personal yakuman winning combination record table (see Fig. 8) are renewed and the procedure is advanced to the next step.

Since a game is ended by the above, the CPU 22 of the gaming server 21 transmits a game end signal to the gaming terminals 41A and 41 B via the communication I/F 26 (step S217). When the CPUs 66 of gaming terminals 41A and 41 B detect the receiving of the end signal via the communication interface circuits 63 (step S109, step S310), the CPU 22 at the gaming server 21 renews the personal record information to the newest state and then the CPU 22 transmits the personal record information that have been renewed to the newest state to the gaming terminals 41A and 41 B via the communication I/F 26 (step S218).

Upon detecting the receiving of the personal record information renewed to the newest state via the communication interface circuits 63 (step S110, step S311), the CPUs 66 of the gaming terminals 41A and 41 B display that information on the display devices 32 (step S111, step S312) and perform rewriting by that information on the magnetic cards in the card reader/writers 83 (see Fig. 27) (step S112, step S313). Thereafter, the game (mah-jong) process, with which a special game can be held based on a certain game player's request to hold a special game, is ended.

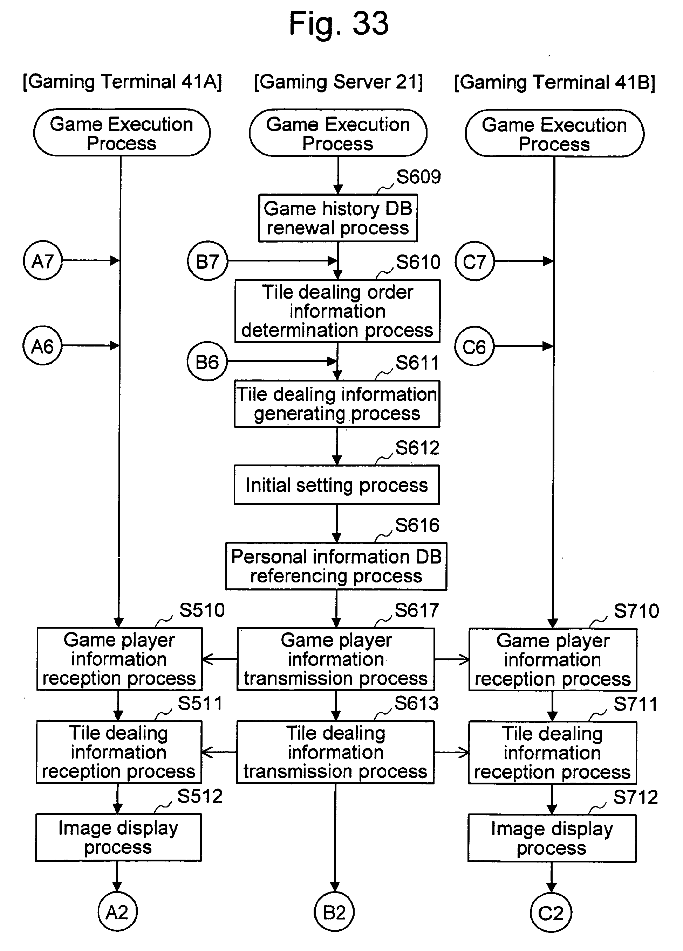

The game execution processes of steps S107, S203, and S308 (Fig. 31), which are carried out by the CPU 22 of the gaming server 21 and by the CPUs 66 of the gaming terminals 41A and 41 B, shall now be described with reference to Fig. 33 to Fig. 37.

At the gaming server 21, a process of renewing the game history database is executed (step S609). In this process, the CPU 22 computes and performs renewed recording of the time, ranking, score information, game results, etc., in the game history database in the storage unit 28. In this step S609, the CPU 22 records the game results as start information. On completion of this step, the process is advanced to the step S610.

A tile dealing order information determination process is then executed at the gaming server 21 (step S610). In this process, the CPU 22 determines tile dealing order information based on the order of game players that was determined by the process of step S604 and records the information in the RAM 23. The tile dealing order information indicate the order in which the tiles are to be distributed. On completion of this step, the process is advanced to the step S611.

The gaming server 21 then generates tile dealing information and records the information in the RAM 23. The tile dealing information is for determining the tiles to be distributed. Though in the present embodiment, the succession of tiles to be distributed is determined at the starting of one game, the present invention is not limited thereto. The tiles to be distributed may be determined when they are distributed to the game players. On completion of this step, the process is advanced to the step S612.

An initial setting process is then executed at the gaming server 21 (step S612). In this process, the CPU 22 records initial setting information that is positioned in the RAM 23 for performing various initial settings relevant to the game. This initial setting information is set in each kyoku round of a mah-jong game, and include various information, such as information on the tiles that are dealt to the game players, information that is to be stored in accordance with each of the plurality of game players, etc. On completion of this step, the process is advanced to the step S616.

A personal information database referencing process is then executed at the gaming server (step S616). In this process, the CPU 22 references the desired displayed ranking setting information, corresponding to each of the game players in the game player group, in the personal information database stored in the storage unit 28 And based on the referenced results, the CPU 22 reads out the ranking title, ranking information, etc., in the ranking information database stored in the storage unit 28. On completion of this step, the process is advanced to the step S617.

Then at the gaming server 21, a game player information transmission process is executed (step S617). In this process, the CPU 22 transmits the ranking information, which was read in the process of step S216, to the gaming terminal 41A and other gaming players, who were determined as belonging to the game player group by the process of step S204 (Fig. 29). Here, the game player information includes signals, by which images of the ranking information, etc., based on the desired displayed ranking setting information for the respective game players, are displayed on the gaming terminal 41A, etc. Though display codes for display of images are transmitted in the present embodiment, the present invention is not limited thereto. It is sufficient that the signals be those for performing the above-described display, and for example, image data may be stored in the gaming server 21 and the image data themselves may be transmitted. On completion of this step, the process is advanced to the step S613.

A tile dealing information transmission process is then executed at the gaming server 21 (step S613). In this process, the CPU 22 transmits the tile dealing information, which were generated in the process of step S611, to the gaming terminal 41A and to other game players, determined as belonging to the game player group by the process of step S204. On completion of this step, the process is advanced to the step S631.

Meanwhile at the gaming terminal 41A, etc., a game player information reception process (step S510) and a tile dealing information reception process are executed (step S511). In these processes, the CPU 66 receives the game player information and the tile dealing information that have been transmitted by the processes of step S613 and step S617 and records the information in the RAM 70. Then based on the game player information and the tile dealing information that has been recorded in the RAM 70, the CPU 66 displays various images, such as the ranking information desired by the game player, tile images, etc., (step S512). Images indicating the game contents are thus displayed on the display device 32 of the gaming terminal 41A. On completion of this step, the process is advanced to the step S531.

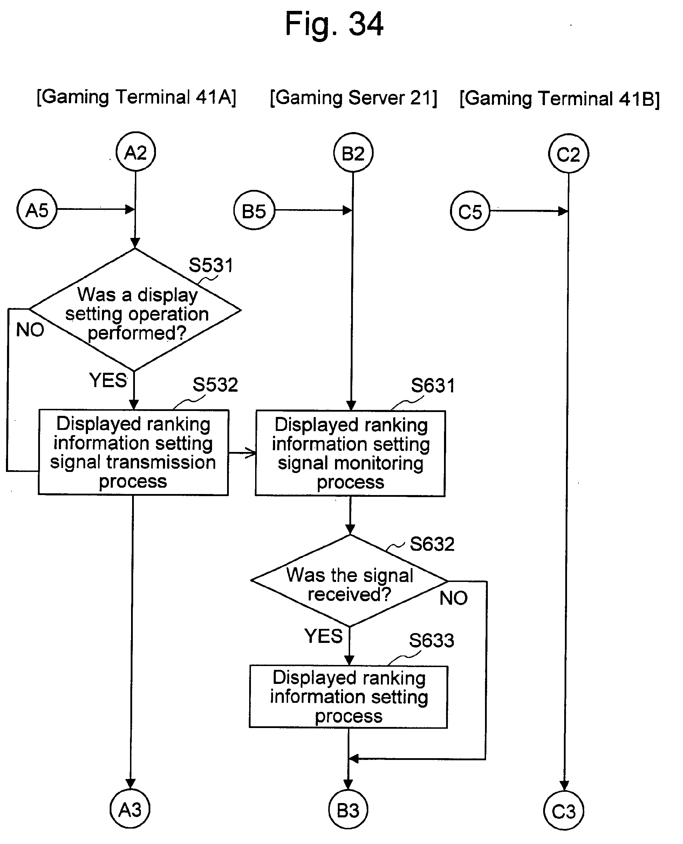

Then at the gaming terminal 41A, etc., whether or not a display setting operation has been performed is determined as shown in Fig. 34 (step S531). In this process, CPUs 66 determine whether or not information, indicating the performing of a display setting operation, have been received from the gaming terminals 41A, etc.

Specifically, when the display setting button image is touched by a game player, the display setting screen is displayed as shown in Fig. 21, and when a setting button image is touched in this screen, a displayed ranking information setting signal transmission process is executed wherein the touch sensor 82, which has detected that the position of the abovementioned setting button image has been touched, supplies a predetermined touch signal to the CPU 66 (step 532).

That is, upon determination that the predetermined touch signal has been received, the CPU 66 transmits the displayed ranking information setting signal to the gaming server 21 and then the process is advanced to the step S521. On the other hand, if it is not determined that the predetermined touch signal has been received, the process is advanced to the step S521.

Meanwhile, at the gaming server 21, a displayed ranking information setting signal monitoring process is executed (step S631 of Fig. 34). In this process, the CPU 22 monitors whether or not a displayed ranking information setting signal has been received. When the CPU 22 then determines that the signal has been received based on the monitoring result (step S632), it executes a displayed ranking information setting process (step S633) while if it is not determined that the signal has been received, the process is advanced to the step S624.

In this step S632, the CPU 22 selects, on the basis of the displayed ranking information setting signal that was received in step S631, desired displayed ranking setting information stored in the storage unit 28. Ranking information can thus be changed as desired by a game player. On completion of this step, the process is advanced to the step S624. By step S632, an example of the function of the ranking information setting means is realized.

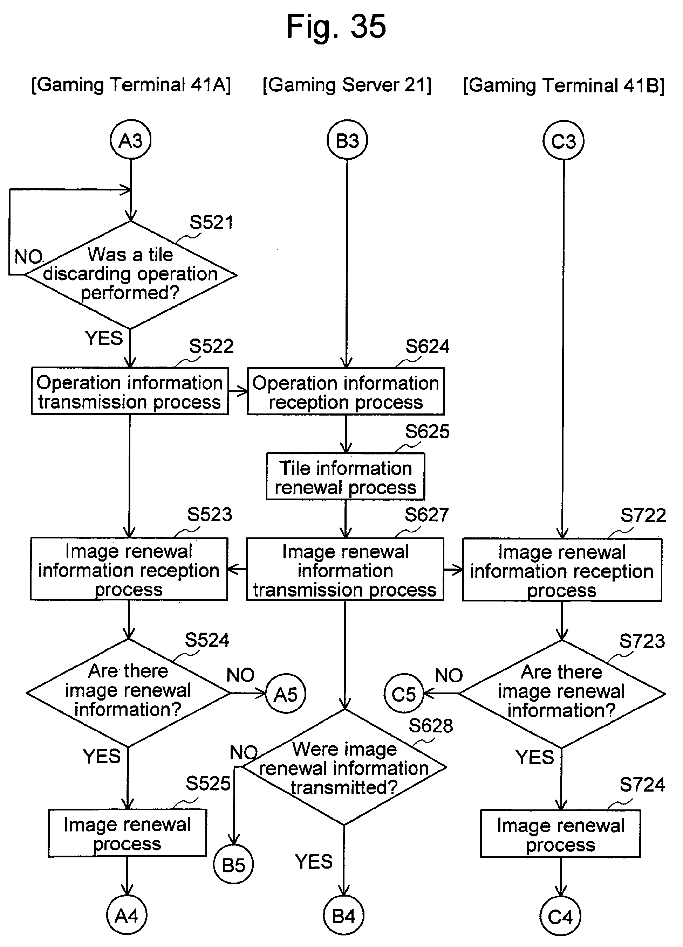

Meanwhile, at the gaming terminal 41A, whether or not a tile discarding operation has been performed is determined as shown in Fig. 35 (step S521). In this process, the CPU 66 receives a touch signal supplied from the touch sensor 82, and based on this touch signal, generates operation information indicating the discarding of a tile. The CPU 66 then transmits the operation information to the gaming server 21 via the communication I/F 74.

Meanwhile at the gaming server 21, an operation information reception process is executed (step S624). In this process, the CPU 22 receives operation information via the communication I/F 26. On completion of this step, the process is advanced to the step S625.

Then at the gaming server 21, a tile information renewal process is executed (step S625). In this process, the CPU 22 renews the tile information stored in the RAM 70 based on the operation information received in the process of step S624. The game can thus be made to progress based on the operations of the players. On completion of this step, the process is advanced to the step S627.

Then at the gaming server 21, an image renewal information transmission process is executed (step S627). In this process, the CPU 22, on the basis of the operation information related to tile discarding that was received in the process of step S624, transmits an image renewal information, indicating that a tile has been discarded, to the gaming terminal 41A, etc. On completion of this step, the process is advanced to the step S628.

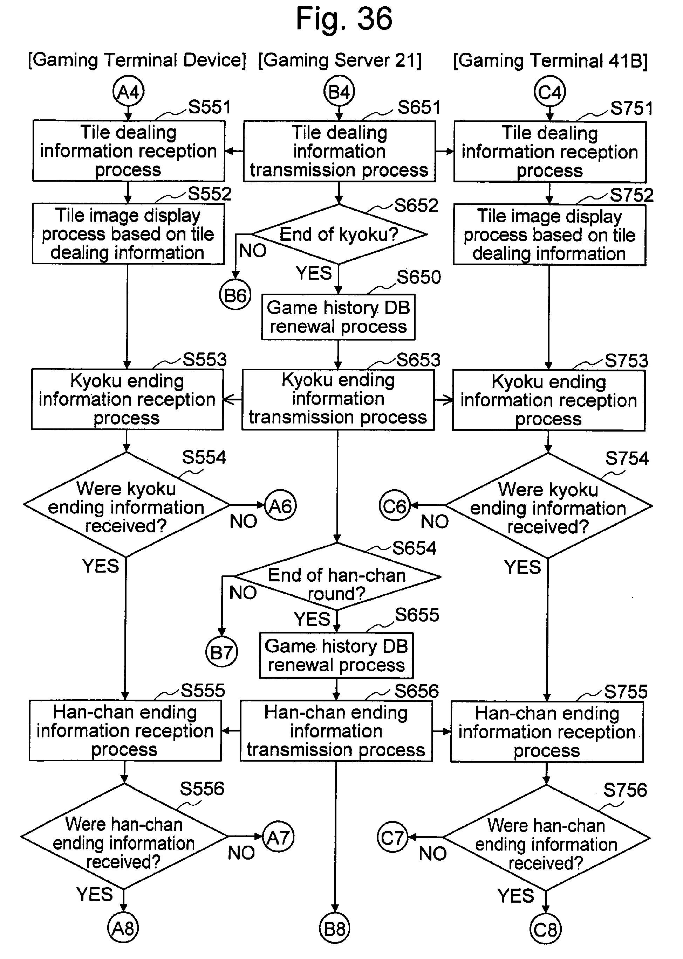

Then at the gaming server 21, whether or not the image renewal information transmission process has been executed is determined (step S628). In this process, the CPU 22 determines whether or not operation information have been received as in the process of step S624. If in this process, the CPU 22 determines that operation information concerning tile discarding have been received, the process is advanced to the step S651 (Fig. 36). If it is not determined that operation information concerning tile discarding have been received, the process is advanced to the step S631.

Meanwhile, at the gaming terminal 41A, etc., an image renewal information reception process is executed (step S523). In this process, the CPU 66 receives image renewal information via the communication I/F 74. On completion of this step, the process is advanced to the step S524.

Whether or not image renewal information has been received is then determined (step S524). In this process, if the CPU 66 determines that image renewal information have been received in the step S523, the process is advanced to the step S525, while if it is not determined that image renewal information have been received, the process is advanced to the step S531.

Then at the gaming terminal 41A, etc., an image renewal process is executed (step S525). In this process, the CPU 66 displays an image on the display device 32 based on the image renewal information received in the process of step S523. For example, if a tile has been discarded, the discarded tile is displayed and the display on the display device 32 is changed so as to renew the image of the tiles on hand of the game player who discarded title. On completion of this step, the process is advanced to the step S551.

Then as shown in Fig. 36, a tile dealing information transmission process is executed at the gaming server 21 (step S651). In this process, the CPU 22 transmits the tile dealing information, generated in the process of step S612, to the gaming terminal 41A and to other game players who have been determined to belong to the game player group. On completion of this step, the process is advanced to the step S652.

Meanwhile, at the gaming terminal 41A, etc., a tile dealing information reception process is executed (step S551). In this process, the CPU 66 receives the tile dealing information that were transmitted by the process of step S651 and records the information in the RAM 70. Then based on the tile dealing information recorded in the RAM 70, the CPU 66 displays tile images and various other images. Images indicating the game contents are thus displayed on the display device 32 at the gaming terminal 41A (step S552). On completion of this step, the process is advanced to the step S553.

Then at the gaming server 21, whether or not to end one kyoku round of a game is determined (step S652). In this process, if predetermined conditions are met, the CPU 22 reads kyoku round ending information, positioned in the RAM 70, and based on this information, determines whether or not to end the kyoku round. If the CPU 22 determines that the kyoku round is to be ended, the process is advanced to the step S650, while if it is not determined that the kyoku round is to be ended, the process is advanced to the step S611.

The game can thus be carried out repeatedly until it is determined that one kyoku round of the game is to be ended. The abovementioned predetermined conditions take on various modes in a mah-jong game and include the formation of a predetermined combination by the dealt tiles, the dealing of a predetermined number of tiles, the receiving of operation information supplied from the gaming terminal 41A, etc.

If in step S652, it is determined that one kyoku round of the game is to be ended, a game history database renewal process is executed (step S650). In this process, the CPU 22 performs renewal recording of the game results at the end of one kyoku round into the game history information. For example, if a certain game player ends the kyoku round with "riichi" and pinfu" winning combinations, the CPU 22 detects this situation and records the game results, including these winning combinations, in the game history database. On completion of this step, the process is advanced to the step S653.

A kyoku round ending information transmission process is then executed (step S653). In this process, the CPU 22 transmits kyoku round ending information for ending a kyoku round in a game to the gaming terminals 41A, etc., via the communication I/F 26, and the gaming terminals 41A, etc., determine whether or not the kyoku round ending information has been received (step S553, step S554). If the CPU 22 determines that the kyoku round ending information has been received, the process is advanced to the step S555, while if it is not determined that the kyoku round ending information has been received, the process is advanced to the step S510.

Then at the gaming server 21, whether or not to end a han-chan round of a game is determined (step S654). In this process, if predetermined conditions are met, the CPU 22 reads han-chan ending information, positioned in the RAM 70, and based on these information, determines whether or not to end the han-chan round. If the CPU 22 determines that the han-chan round is to be ended, the process is advanced to the step S655, while if it is not determined that the han-chan round is to be ended, the process is advanced to the step S610. Thus until the determination that the han-chan round of the game is to be ended is made, the game is continued by repeating kyoku rounds.

If in step S654, it is determined that the han-chan round of the game is to be ended, the game history database renewal process is executed (step S655). In this process, the CPU 22 performs renewal recording of the game results at the end of the han-chan round into the game history information. For example, as the ending information, the CPU 22 records the game results, including the overall ranking, overall score, etc., in the game history database. On completion of this step, the process is advanced to the step S656.

A han-chan round ending information transmission process is then executed (step S656). In this process, the CPU 22 transmits han-chan round ending information for ending the han-chan round in a game to the gaming terminals 41A, etc., via the communication I/F 26, and the gaming terminals 41A, etc., determine whether or not the han-chan round ending information has been received (step S555, step S556). If the CPU 22 determines that the han-chan round ending information has been received, the process is advanced to the step S561, while if it is not determined that the han-chan round ending information has been received, the process is advanced to the step S510.

Then at the gaming server, a ranking information determination process is executed (step S661). In this process, the CPU 22 determines, on the basis of the game history information, the various ranking information that exists in plurality. On completion of this step, the process is advanced to the step S661. By step S661, an example of the function of the ranking information determining means is realized.

A ranking information database renewal process is then executed at the gaming server 21 (step S662). In this process, the CPU 22 performs renewal recording of the ranking information database in the storage unit 28 based on the various ranking information determined by the process of step S661. On completion of this step, the process is advanced to the step S663.

A ranking information transmission process is then executed at the gaming server 21 (step 663). In this process, the CPU 22 reads out, from the personal information database stored in the storage unit 28, the desired displayed ranking setting information corresponding to each of the game players included in the game player group, reads the corresponding ranking information from the storage unit 28, in which the ranking information database is stored, and transmits the information to the corresponding gaming terminal 41A.

Though with the present embodiment, ranking information is transmitted, the present invention is not limited thereto, and it is sufficient that ranking information images desired by the game player are made to be displayed on the gaming terminal 41A. For example, arrangements may be made so that at the gaming server 21, the CPU 22 selects and reads out, on the basis of the ranking information, image data that are stored in the storage unit 28, etc., in advance and transmits the read image data. Furthermore, instead of storing image data in advance, arrangements may be made to generate image data based on the ranking information.

Meanwhile, at the gaming terminal 41A, a ranking information reception process is executed (step S561). In this process, the CPU 66 receives the ranking information that was transmitted by the process of step S663 and records the information in the RAM 70. On completion of this step, the process is advanced to the step S562.

A ranking display process is then executed at the gaming terminal 41A (step S562). In this process, the CPU 66 makes ranking information images, such as shown in Fig. 23, be displayed on the display device 32 based on the ranking information received by the process of step S561. On completion of this step, the present subroutine is ended.

Since not just one but a plurality of types of ranking information is displayed, it is enabled to display various ranking information without being limited to certain ranking information. And a game enhancing the gaming motivation can thus be provided.

Also, by the display of ranking information desired by the game players, a simple game can be provided. And a game, with which the gaming motivation of each of a plurality of game players can be enhanced in accordance with the game situation of each game player, can be provided.

Furthermore, the types of ranking information to be displayed can be set according to the operations of a game player, and by storage of the setting state, troublesome operations can be avoided. The lessening of a game player's gaming motivation can thus be prevented.

Though a "game," described above, is a concept that includes games in general, competing games that are played with other game players are preferable, and among such games, those involving tactics are preferable, and, for example, a mah-jong game or a card game, etc., is optimal.

Furthermore, based on the ranking information desired by a game player, that is, based on the desired ranking information that is set to be displayed in consideration of the game player's viewpoint concerning the game, game players who have set the same ranking information can be determined as a game player group, and by thus collecting game players of similar viewpoints concerning the game as a game player group, a game that is in accordance with the interests of the respective game players can be provided and thus a new gaming property can be provided.

By this arrangement, a new gaming property can also be provided by forming a game player group not just from players who have set the same ranking information but also by forming a game player group from player who have set different ranking information. An even newer gaming property can be provided by forming a game player group from game players who, among those who have set different ranking information, have set extreme opposite types of ranking information.

In the above description, the various processes realized by the CPU 22 realize the functions of the various means.

Here, the gaming server 21 of the present embodiment is described as having only the minimum required configuration, and the functions of the various means are realized by the CPU 22 of the gaming server 21 which executes computer programs stored in the RAM 23, ROM 24, or storage unit 28. However, arrangements may be made to enable the connection of circuits formed by various hardware to realize the functions of the various means. For example, Fig. 39 shows, as an example of another embodiment of the present invention, a configuration with which various devices are connected by a bus in a gaming server 21Z. In addition to a CPU 13Y, a RAM 15Y, a ROM 14Y, a communication I/F 17Y, and a storage unit 16Y, an address management unit 19Y, which manages the connection address information of the gaming terminal groups 31A and 31 B, which are connected to the present invention's gaming system 10, is connected to the bus. The connection address information that is managed here are, for example, TCP numbers and IP addresses of the TCP/IP protocol, which is a standard protocol for the Internet.

Also connected to the bus are a special game holding request reception unit 20Y, which receives special game holding requests from game players, a game player selection unit 21Y, which selects, from among the game players connected to the gaming system 10, applicable game players to whom the abovementioned special game holding request is to be notified, a special game guidance unit 22Y, which notifies special game participation offer and guidance to the game players selected by the abovementioned game player selection unit 21Y, and a special game participation information reception unit 23Y, by which the game players selected by the abovementioned game player selection unit 21Y transmit information on their intention to participate in a special game in response to the notification of the special game participation offer and guidance.

Furthermore connected to the bus are a game management unit 24Y, which forms a game player group of four players each in the case of a mah-jong game, played on the present invention's gaming system 10, that is not a game based on a certain game player's holding request and manages the game players participating in a mah-jong game and the progress of the mah-jong game regardless of whether or not the mah-jong game is a special game based on a certain game player's holding request, a tile dealing management unit 25Y, which manages predetermined actions and states of mah-jong, such as "haipai (distribution)," "tsumo (tile drawing)," "tapai (tile discarding)," "sutehai (discarded tile)," etc., in cooperation with the random number generating part 18Y under the control of the CPU22 , a game player substitution function unit 26Y, which, when it is impossible for the game management unit 24Y to group of the game players into a four player group, that is, when the number of game participants does not reach the number of four game players, arranges the participation of a virtual game player and thereby makes the gaming server 21 play as a substitute game player, a special game generating unit 27Y, which, besides times when a special game based on a holding request by a certain game player is generated, searches the personal information of the game players and determines a special game to be generated based on the personal information, a game player authentication unit 28Y, which performs game player authentication when a game player who intends to play a game with game terminal groups 31A and 31 B logs into the present invention's gaming system, and a personal record renewal unit 29Y, which during a game or at the end of a game, renews the personal records of the respective game players participating in the game to the newest states.

Though with the embodiment, a preferred example of a mah-jong game was described, the present invention is not limited thereto and may be applied to various gaming machines and game modes in which a special interval that prompts a game player to perform an operation is generated. In particular, the present invention is preferably applied to games, such as card games, including poker, that require the practicing of tactics among the game players.

The description of advantages in this specification is only an illustration of most preferable advantages obtained in the invention. The advantages obtained in the invention are not limited to those described in this specification.

With the present invention, not just one but a plurality of types of ranking information is displayed, and thus from a game player's standpoint, various ranking information can be displayed without being limited to a certain type of ranking information, and a game, with which the gaming motivation can be enhanced, can thus be provided.

## Claims

1. A gaming system providing a game participated by a plurality of game players comprising: a plurality of gaming terminals, each having an operating part operable by a game player; and a gaming server transmitting and receiving data concerning the game to and from the plurality of gaming terminals,
wherein the gaming server comprising:
game result storage means storing game results concerning the game for each of the plurality of game players;
ranking determining means, determining a plurality of types of rankings concerning the game based on the game results stored by the game result storage means;
ranking information setting means, selecting, from among the plurality of types of ranking information determined by the ranking determining means, desired ranking information in accordance with a player operation of the operating part of a gaming terminal among the plurality of gaming terminals; and
transmitting means, transmitting the desired ranking information, set by the ranking information setting means, to a gaming terminal among the plurality of gaming terminals.

2. The gaming system according to Claim 1, further comprising address information managing means, managing address information concerning the plurality of gaming terminals corresponding to the respective game players.

3. The gaming system according to Claim 1, wherein the gaming server further comprises game player group determining means, determining a game player group of a plurality of game players, on the basis of the desired ranking information set by the ranking information setting means.

4. A gaming system providing a game participated by a plurality of game players comprising: a plurality of gaming terminals, each having an operating part operable by a game player; and a gaming server transmitting and receiving data concerning the game to and from the plurality of gaming terminals,
wherein the gaming server comprising:
personal information managing means, managing personal information concerning the plurality of game players;
special game request reception means, receiving special game holding request information including specific personal information from a game player;
game player selecting means, selecting, based on the specific personal information and the personal information managed by the personal information managing means and from among the plurality of game players, game players having a specific relationship with the specific personal information are selected; and
special game guidance means, transmitting special game participation offer and guidance information to a player selected by the game player selection means.

5. The gaming system according to Claim 4, further comprising address information managing means, managing address information concerning the plurality of gaming terminals corresponding to the respective game players.

6. The gaming system according to Claim 4, wherein the game player selecting means selects, from among the game players of gaming terminals having access to the gaming server, the game players to which the conditions of the specific personal information apply.

7. A gaming server, transmitting and receiving data concerning a game to and from a plurality of gaming terminals, each having an operating part operable by a game player, comprising:
game result storage means, storing game results concerning the game for each of the plurality of game players;
ranking determining means, determining a plurality of types of rankings concerning the game based on the game results stored by the game result storage means;
ranking information setting means, selecting, from among the plurality of types of ranking information determined by the ranking determining means, desired ranking information in accordance with a player operation of the operating part of a gaming terminal among the plurality of gaming terminals; and
transmitting means, transmitting the desired ranking information, set by the ranking information setting means, to a gaming terminal among the plurality of gaming terminals.

8. The gaming server according to Claim 7, further comprising game player group determining means, determining a game player group of a plurality of game players on the basis of the plurality of desired ranking information set by the ranking information setting means.

9. A gaming server, transmitting and receiving data concerning a game to and form a plurality of gaming terminals, each having an operating part operable by a game player, comprising:
personal information managing means, managing personal information concerning the plurality of game players;
special game request reception means, receiving, special game holding request information, including specific personal information, from a game player;
game player selecting means, selecting, based on the specific personal information and the personal information managed by the personal information managing means from among the plurality of game players, game players having a specific relationship with the specific personal information are selected; and
special game guidance means, transmitting special game participation offer and guidance information to a player selected by the game player selection means.

10. The gaming server according to Claim 9, wherein the game player selecting means selects, from among the game players of gaming terminals having access to the gaming server, the game players to which the conditions of the specific personal information apply.

11. A gaming server, transmitting and receiving data concerning a game to and form a plurality of gaming terminals, each having an operating part operable by a game player, comprising:
a controller executing a computer program; and
a storage unit, wherein
the controller stores the game results concerning the game for each of the plurality of game players in the storage unit,
determines a plurality of types of rankings concerning the game based on the game results stored in the storage unit,
selects, from among the plurality of types of ranking information that have been determined, desired ranking information, which are desired by a game player, in accordance with a player operation of the operating part of a gaming terminal among the plurality of gaming terminals, and
transmits the desired ranking information to the gaming terminal among the plurality of gaming terminals.

12. A gaming server, transmitting and receiving data concerning a game to and from a plurality of gaming terminals, each having an operating part operable by a game player, comprising:
a controller executing a computer program; and
a storage unit, wherein
the storage unit stores address information, concerning the plurality of gaming terminals corresponding to the respective players, and personal information, concerning the plurality of game players, and
the controller receives special game holding request information, includes specific personal information, from a game player,
selects, based on the personal information stored in the storage unit and from among the plurality of game players, game players to which a specific relationship with the specific personal information are selected; and
transmits special game participation offer and guidance information to the selected game player.
